# EUROPEAN PATENT APPLICATION

(11) **EP 4 757 408 A1**
(43) Date of publication of application: **10.06.2026**
(21) Application number: 23947067.7
(22) Date of filing: 31.07.2023
(51) Int. Cl.: H04W 28/16, H04W 76/12

(54) **USER PLANE PATH ESTABLISHMENT METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); WANG, Xinli, Beijing 100085 (CN); SHEN, Yang, Beijing 100085 (CN); LI, Lisi, Beijing 100085 (CN)
(74) Representative: Stöckeler, Ferdinand
(86) International application number: PCT/CN2023/110437
(87) International publication number: WO 2025/025119

(57) **Abstract**

The present disclosure provides a user plane path establishment method and apparatus, a communication device, a communication system, and a storage medium. The method comprises: a first network element determines first information, wherein the first information is used for establishing a user plane path, and one end of the user plane path is an access network device; the first network element determines a second network element on the basis of the first information, wherein the second network element is used for establishing a user plane path; and the first network element sends a first message to a third network element, wherein the first message comprises: indication information and core network tunnel information of the second network element, and the indication information is used for indicating establishment of the user plane path. The method of the present disclosure can effectively improve the transmission efficiency of service data from an access network device.

## Description

### TECHNICAL FIELD

The disclosure relates to the field of communication technologies, and in particular to a method and an apparatus for establishing a user plane path, a communication device, a communication system and a storage medium.

### BACKGROUND

In integrated sensing and communication services, terminals can act as either transmitters or receivers, and access network devices can also act as transmitters or receivers. There are six sensing modes: in Mode 1, a single terminal acts as both transmitter and receiver; in Mode 2, one terminal (Terminal-1) serves as the transmitter while another terminal (Terminal-2) acts as the receiver; in Mode 3, an access network device acts as both transmitter and receiver; in Mode 4, one access network device (Device-1) acts as the transmitter while another access network device (Device-2) acts as the receiver; in Mode 5, an access network device acts as the transmitter while a terminal acts as the receiver; and in Mode 6, a terminal acts as the transmitter while an access network device acts as the receiver.

### SUMMARY

Embodiments of the present disclosure provide a method and an apparatus for establishing a user plane path, a device, a chip system, a storage medium, a computer program and a computer program product, which can be applied in the field of communication technologies, to solve the technical problem of "low transmission efficiency of service data originating from an access network device".

The present disclosure proposes a method and an apparatus for establishing a user plane path, a communication device, a communication system, and a storage medium.

According to a first aspect of embodiments of the present disclosure, a method for establishing a user plane path is provided. The method is performed by a first network element, and includes: determining first information, wherein the first information is configured to establish a user plane path, wherein one end of the user plane path is an access network device; determining a second network element according to the first information, wherein the second network element is configured to establish the user plane path; and sending a first message to a third network element, wherein the first message includes indication information and core network tunnel information of the second network element, and wherein the indication information indicates to establish the user plane path.

According to a second aspect of embodiments of the present disclosure, a method for establishing a user plane path is provided. The method is performed by a third network element, and includes: receiving a first message sent by a first network element, wherein the first message includes indication information and core network tunnel information of a second network element, the indication information indicates to establish a user plane path, one end of the user plane path is an access network device, and the second network element is selected based on first information; and sending a fourth message to the access network device, wherein the fourth message includes the indication information and the core network tunnel information.

According to a third aspect of embodiments of the present disclosure, a method for establishing a user plane path is provided. The method is performed by an access network device, and includes: receiving a fourth message sent by a third network element, wherein the fourth message includes indication information and core network tunnel information of a second network element, the indication information indicates to establish a user plane path, and one end of the user plane path is the access network device.

According to a fourth aspect of embodiments of the present disclosure, a method for establishing a user plane path is provided, including: by a first network element, determining first information, determining a second network element according to the first information, and sending a first message to a third network element, wherein the first information is configured to establish a user plane path, one end of the user plane path is an access network device, the second network element is configured to establish the user plane path, the first message includes indication information and core network tunnel information of the second network element, and the indication information indicates to establish the user plane path; by the third network element, receiving the first message sent by the first network element, and sending a fourth message to the access network device, wherein the fourth message includes the indication information and the core network tunnel information; by the access network device, receiving the fourth message sent by the third network element, and sending a fifth message to the third network element, wherein the fifth message includes access network tunnel information of the access network device, and the access network tunnel information is configured to establish the user plane path; and by the third network element, receiving the fifth message sent by the access network device, and sending a second message to the first network element, wherein the second message includes the access network tunnel information.

According to a fifth aspect of embodiments of the present disclosure, a method for establishing a user plane path is provided, including: by a first network element, determining a third network element based on first information, and sending a first request message to the third network element, wherein the first information is configured to establish a user plane path, one end of the user plane path is an access network device, and the first request message is configured to request obtaining access network tunnel information of the access network device; by the third network element, sending a second request message to the access network device, wherein the second request message is configured to request obtaining the access network tunnel information of the access network device; by the access network device, receiving the second request message sent by the third network element, and sending a first response message to the third network element, wherein the first response message is configured to indicate the access network tunnel information; by the third network element, receiving the first response message, and sending a second response message to the first network element, wherein the second response message is configured to indicate the access network tunnel information; and by the first network element, receiving the second response message sent by the third network element.

According to a sixth aspect of embodiments of the present disclosure, an apparatus for establishing a user plane path is provided, including: a transceiver module, configured to determine first information and send a first message to a third network element, wherein the first information is configured to establish a user plane path, one end of the user plane path is an access network device, the first message includes indication information and core network tunnel information of a second network element, the indication information indicates to establish the user plane path, and the second network element is configured to establish the user plane path; and a processing module, configured to determine the second network element according to the first information.

According to a seventh aspect of embodiments of the present disclosure, an apparatus for establishing a user plane path is provided, including: a transceiver module, configured to receive a first message sent by a first network element, wherein the first message includes indication information and core network tunnel information of a second network element, the indication information indicates to establish a user plane path, one end of the user plane path is an access network device, the second network element is selected based on first information; and send a fourth message to the access network device, wherein the fourth message includes the indication information and the core network tunnel information; or receive a fourth message sent by a third network element, wherein the fourth message includes the indication information and the core network tunnel information, the indication information indicates to establish the user plane path, and one end of the user plane path is the access network device.

According to an eighth aspect of embodiments of the present disclosure, a communication device is provided, including one or more processors; wherein the processor is configured to call instructions to cause the communication device to implement the method for establishing a user plane path according to any of the first aspect, the second aspect, the third aspect, the fourth aspect, or the fifth aspect.

According to a ninth aspect of embodiments of the present disclosure, a communication system is provided, including a first network element, a second network element, a third network element, and an access network device, wherein the first network element is configured to implement the method of the first aspect, the third network element is configured to implement the method of the second aspect, and the access network device is configured to implement the method of the third aspect.

According to a tenth aspect of embodiments of the present disclosure, a storage medium is provided. The storage medium stores instructions that, when run on a communication device, cause the communication device to implement the method for establishing a user plane path according to any of the first aspect, the second aspect, the third aspect, the fourth aspect, or the fifth aspect.

### BRIEF DESCRIPTION OF THE DRAWINGS

To more clearly illustrate the technical solutions in the embodiments or background technology of the present disclosure, the drawings required for the embodiments or background technology will be described below.
FIG. 1 is a schematic diagram of an architecture of a communication system according to an embodiment of the present disclosure.
FIG. 2 is a schematic diagram of sensing modes in an embodiment of the present disclosure.
FIG. 3A is a schematic diagram of interaction in a method for establishing a user plane path according to an embodiment of the present disclosure.
FIG. 3B is a schematic diagram of interaction in a method for establishing a user plane path according to an embodiment of the present disclosure.
FIG. 3C is a schematic diagram of interaction in a method for establishing a user plane path according to another embodiment of the present disclosure.
FIG. 3D is a schematic diagram of interaction in a method for establishing a user plane path according to another embodiment of the present disclosure.
FIG. 3E is a schematic diagram of interaction in a method for establishing a user plane path according to another embodiment of the present disclosure.
FIG. 4A is a schematic diagram of interaction in a method for establishing a user plane path according to another embodiment of the present disclosure.
FIG. 4B is a schematic diagram of interaction in a method for establishing a user plane path according to another embodiment of the present disclosure.
FIG. 4C is a schematic diagram of interaction in a method for establishing a user plane path according to another embodiment of the present disclosure.
FIG. 5A is a schematic diagram of interaction in a method for establishing a user plane path according to another embodiment of the present disclosure.
FIG. 5B is a schematic diagram of interaction in a method for establishing a user plane path according to another embodiment of the present disclosure.
FIG. 5C is a schematic diagram of interaction in a method for establishing a user plane path according to yet another embodiment of the present disclosure.
FIG. 6 is a schematic diagram of interaction in a method for establishing a user plane path according to yet another embodiment of the present disclosure.
FIG. 7 is a schematic diagram of interaction in a method for establishing a user plane path according to yet another embodiment of the present disclosure.
FIG. 8A is a schematic diagram of interaction in a method for establishing a user plane path according to still another embodiment of the present disclosure.
FIG. 8B is a schematic diagram of interaction in a method for establishing a user plane path according to still yet another embodiment of the present disclosure.
FIG. 9A is a block diagram of an apparatus for establishing a user plane path according to an embodiment of the present disclosure.
FIG. 9B is a block diagram of an apparatus for establishing a user plane path according to an embodiment of the present disclosure.
FIG. 10A is a block diagram of a communication according to an embodiment of the present disclosure.
FIG. 10B is a block diagram of a chip according to an embodiment of the present disclosure.

### DETAILED DESCRIPTION

Embodiments of the present disclosure propose a method and an apparatus for establishing a user plane path, a communication device, a communication system, and a storage medium. In some embodiments, terms such as "method for establishing a user plane path", "information processing method", and "communication method" can be replaced with each other, terms such as "apparatus for establishing a user plane path", "information processing device", and "communication device" can be replaced with each other, and terms such as "information processing system" and "communication system" can be replaced with each other.

The embodiments of the present disclosure are not exhaustive and only serve as illustrations of some embodiments, but not as specific limitations to the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In embodiments of the present disclosure, expressions such as "at least one of A, B, C..." and "A and/or B and/or C..." include the case where any one of A, B, C... exists alone, as well as any combination of any multiple of A, B, C..., each of which can exist alone. For example, "at least one of A, B, or C" includes cases where A is alone, B is alone, C is alone, A and B are combined, A and C are combined, B and C are combined, and A and B and C are combined. For example, "A and/or B" includes cases where A is alone, B is alone, or A and B are combined.

In some embodiments, expressions such as "in a case, A, in another case, B", and "in response to a case, A, in response to another case, B" in the present disclosure, depending on situations, may include at least one of the following solutions: performing A in some embodiments (performing A independently of B); performing B in some embodiments (performing B independently of A); selecting one of A or B for execution in some embodiments (selectively performing A or B); and performing A and B in some embodiments (performing both A and B). The similar principle applies when there are more branches such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "element", ordinal numbers before the "element" in "first element" and "second element" do not limit a position or a sequence between elements. "First" and "second" do not limit whether modified "elements" are in the same message, nor do an order of the "first element" and the "second element." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects described by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "not smaller than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" may be interpreted as either a physical apparatus or a virtual apparatus. Names are not limited to those recorded in embodiments, and terms "apparatus", "device", "equipment", "circuit", "network element", "node", "function", "unit", "section", "system", "network", "chip", "chip system", "entity", "subject", etc. may be exchanged with each other.

In some embodiments, "network" may be interpreted as a device included in a network, for example, an access network device, a core network device, and the like.

In some embodiments, terms "access network device (AN device)", "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be exchanged with each other.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be exchanged with each other.

In some embodiments, obtaining data, information, etc. shall comply with laws and regulations of a country where it is located.

In some embodiments, data, information, etc. may be obtained after agreed by a user.

In addition, each element, each row, or each column in tables of the embodiments of the present disclosure may be implemented as an independent embodiment. Any combination of elements, rows, or columns may also be implemented as an independent embodiment.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The names of the parameters shown in titles in the above tables can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in advance, stored, pre-stored, pre-negotiated, pre-configured, solidified, or pre-fired.

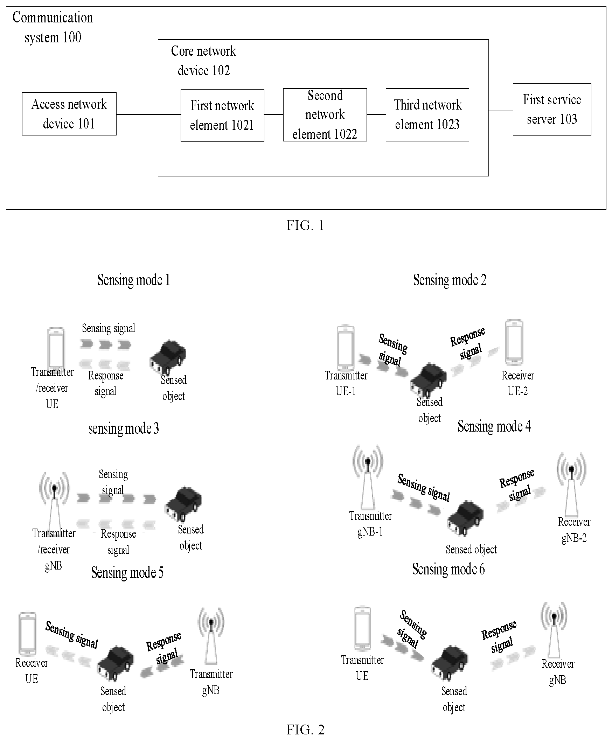

FIG. 1 is a schematic diagram of an architecture of a communication system according to the embodiments of the present disclosure. As shown in FIG. 1, the communication system 100 may include an access network device 101, a core network device 102 and a first service server 103.

In some embodiments, the access network device 101 may be, for example, a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited thereto.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited thereto.

In some embodiments, the core network device 102 may be a single device, such as a first network element 1021, a second network element 1022, a third network element 1023, etc., or may include multiple devices or device groups, each including some or all of the first network element 1021, the second network element 1022, and the third network element 1023. The network elements may be virtual or physical. The core network includes, for example, at least one of an evolved packet core (EPC), a 5G core network (5GCN), or a next generation core (NGC).

In some embodiments, the first network element 1021 is, for example, a session management function (SMF) network element.

In some embodiments, the first network element 1021 is configured to provide a session management function, and the name is not limited to this.

In some embodiments, the second network element 1022 is, for example, a user plane function (UPF) network element.

In some embodiments, the second network element 1022 is configured to provide a user plane function, and the name is not limited to this.

In some embodiments, the third network element 1023 is, for example, an access and mobility management function (AMF) network element.

In some embodiments, the third network element 1023 is configured to provide an access and mobility management function, and the name is not limited to this.

The first service server 103 may be, for example, an application server, a Network Function (NF) network element of the core network, or a third-party server. The first service server 103 may be configured to provide a first service, such as a sensing service, or other services.

It may be understood that the communication system in the embodiments of the present disclosure is intended to illustrate the technical solution in the embodiments of the present disclosure more clearly, and does not constitute a limitation on the technical solution in the embodiments of the present disclosure. Those skilled in the art may know that the technical solution in the embodiments of the present disclosure is equally applicable to similar technical problems, with the evolution of a system architecture and the emergence of a new service scene.

The embodiments of the present disclosure may be applied to the communication system 100 shown in FIG. 1, or part of entities, but is not limited thereto. Entities in FIG. 1 are illustrative. The communication system may include all or part of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Various embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them and extended from the above, etc. In addition, a combination of a plurality of systems (e.g., a combination of LTE or LTE-A with 5G) may also be applied.

In order to facilitate understanding, terms involved in the present disclosure are introduced first.

### 1. Access and mobility management function (AMF) network element

The AMF network element is a logical node functional network element on the core network side, which serves as the control plane access point for terminals and wireless networks. The AMF network element receives all connection and session related information from user devices and performs registration, connection, accessibility, and mobility management. In addition, the AMF network element provides session management message transmission channels for terminals and session management function (SMF) devices, providing authentication and authentication functions for user access.

### 2. Location management function (LMF) network element

LMF is located on the local radio access network (RAN) side or on the core network (CN) side, and is configured to provide location management services to UE.

3. User plane function (UPF) network element, including routing and forwarding of user packets, data interaction with external data networks, QoS processing of user plane, implementation of flow control rules (such as gating, redirection, traffic diversion), etc.

Optionally, in integrated sensing and communication services, terminals can act as either transmitters or receivers, and access network devices can also act as transmitters or receivers. There are six sensing modes. As shown in FIG. 2, which is a schematic diagram of sensing modes in an embodiment of the present disclosure, taking the terminal being UE and the access network device being gNB as an example, in sensing mode 1, a UE acts as both transmitter and receiver; in sensing mode 2, UE-1 serves as the transmitter while another UE-2 acts as the receiver; in sensing mode 3, a gNB acts as both transmitter and receiver; in sensing mode 4, a gNB-1 acts as the transmitter while another gNB-2 acts as the receiver; in sensing mode 5, a gNB acts as the transmitter while a UE acts as the receiver; and in sensing mode 6, a UE acts as the transmitter while a gNB acts as the receiver.

Optionally, in the scenario shown in FIG. 2, gNB serves as the receiver to collect 3GPP service data in sensing modes 3, 4, and 6.

Optionally, some gNBs equipped with radar and cameras may have non-Third Generation Partnership Project (3GPP) sensing capabilities and can perform sensing by sending non-3GPP service data to the sensing server. The non-3GPP sensing capability refers to the ability to perform sensing based on non-3GPP wireless signals (such as radar, camera, or Wi-Fi signals), and non-3GPP sensing service data refers to the service data generated by sensing based on non-3GPP wireless signals.

Optionally, the user plane path is established between the terminal and the data network (DN) through a protocol data unit (PDU) session management mechanism. The PDU session management mechanism mainly includes: PDU session establishment, PDU session modification, and PDU session release.

Optionally, the PDU session establishment is initiated by the terminal using NAS message, and the session management functionalities are implemented by the core network device (for example, the SMF network element).

Optionally, the access network device can use the user plane path of the existing PDU session to transport the PDU packet(s), for example, forwarding the PDU packet(s) sent from the terminal to the core network device (such as the UPF network element), which then forwards the PDU packet(s) to the service server identified by the destination address of the PDU packet(s).

One end of the user plane path described in embodiments of the present disclosure is an access network device. For example, a user plane path may include two ends, one of which is connected to an access network device. The access network device is the device connected to one end of the user plane path, or it can be understood that the user plane path terminates at the access network device, or it can be understood that the user plane path is a user plane path unrelated to the terminal. The user plane connection based on this user plane path is different from the user plane connection originating from the terminal. The data of the user plane connection based on this user plane path terminates at one end at the access network device, such as the service data packet sent and packaged by the access network device or the service data packet received and parsed by the access network. The user plane path is configured to connect the access network and the data network, where the data network is the data network to which the first service server belongs. The data network may be the exclusive data network of the first service server or a data network shared with other service servers.

In embodiments of the present disclosure, considering the large amount of service data, it is possible to support the transmission of service data originating from the access network device through the user plane path. As the established user plane path can support the establishment of the user plane connection between the access network device and the service server, this user plane connection can be directly used to transmit the service data originating from the access network device to the service server, greatly reducing the transmission path of service data and thus improving the transmission efficiency of service data originating from the access network device.

In embodiments of the present disclosure, service data packets can be generated by the access network device and sent to the service server for sensing via the user plane.

The N1 information in embodiments of the present disclosure may be, for example, control plane information sent to the terminal, N1 information between the core network and the terminal may be forwarded by the (R)AN, and N2 information may be, for example, control plane information between the (R)AN and the core network. The control plane interaction interface between the core network and (R)AN is the N2 interface. The N1 information sent by the core network to the terminal is sent to the (R)AN through the N2 interface, and then forwarded to the terminal by the (R)AN, and vice versa. The N2 information sent by the core network to the (R)AN is sent to the (R)AN through the N2 interface, and vice versa.

The N1N2 information in embodiments of the present disclosure may refer to N1 information and/or N2 information.

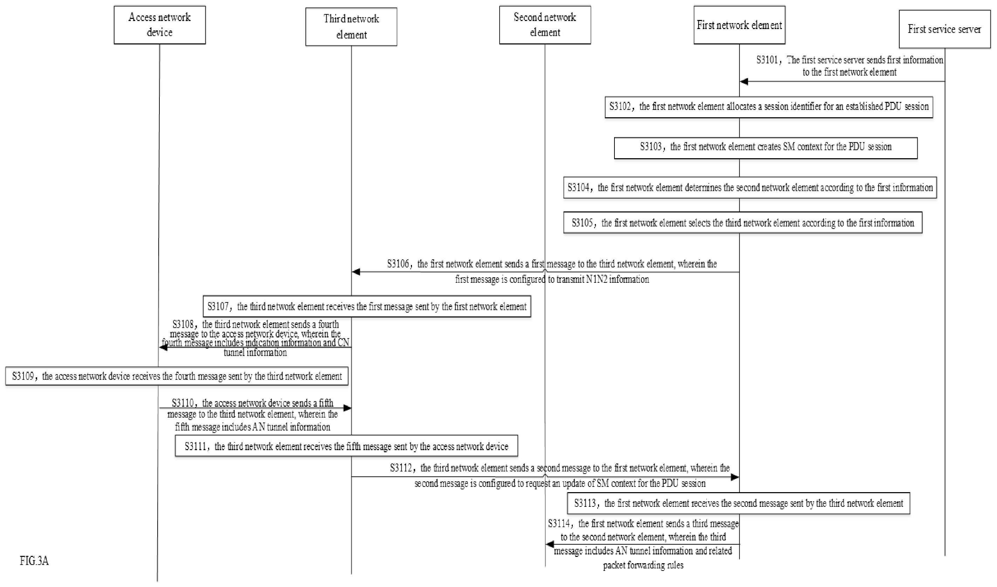

FIG. 3A is a schematic diagram of interaction in a method for establishing a user plane path according to an embodiment of the present disclosure. As shown in FIG. 3A, this embodiment of the present disclosure relates to a method for establishing a user plane path, which can be used in the communication system 100. In an embodiment of the present disclosure, a user plane path may be established through a PDU session management mechanism. The user interface path may include two ends, one of which is connected to the access network device. The method includes the following steps.

At step S3101, a first service server sends first information to a first network element.

In some embodiments, the first service server may be, for example, an application server that provides a first service, which may be a Network Function (NF) network element of the core network, or a third-party server. The first service server may be configured to provide the first service, such as sensing service, positioning service, or other services, so as to support efficient forwarding of service data from the access network device to the NF network element in the core network, or efficient forwarding of service data from the access network device to the third-party server.

In some embodiments, the first service server is, for example, a network function of the core network providing sensing services, such as an SF network element, or a network function of the core network providing positioning services, such as an LMF network element. In some embodiments, the first network element is, for example, the SMF network element.

In some embodiments, the access network device may be, for example, a Radio Access Network (RAN).

In some embodiments, the first service data is, for example, sensing service data (specifically, sensor data), or may also be positioning service data (specifically, location data).

In some embodiments, the first information may include at least one of indication information, information of the access network device, a data network name (DNN) associated with the user plane path, single network slice selection assistance information (S-NSSAI) associated with the user plane path, information of the first service server, service area information, or service location information.

The indication information is configured to indicate establishment of the user plane path. Alternatively, the indication information is configured to indicate that the established user plane path is a designated user plane path, with one end of the designated user plane being the access network device. It is possible to implicitly indicate the establishment of the user plane path by including information about the access network device in the indication information, or by including separate information in the indication information. This separate information may, for example, specify a specific user plane path type or PDU session type that terminates at one end to the access network device, or may also be implemented based on other information that can specify this information (this information refers to the specific user plane path type or PDU session type that terminates at one end to the access network device). The transmission process of this indication information within the core network and between the access network device and the core network device can be achieved through different forms and parameters. That is to say, the first network element can obtain the first information from the first service server and determines to establish a user plane path based on the first information, and determines that one end of the user plane path is the access network device.

The service area information is configured to describe a target area of the first service. The service location information is configured to describe a target location of the first service. The service area information and/or service location information may be used to support the first network element in selecting suitable network elements that provide user plane functionality based on the first information. The target area of the first service may refer to the geographical region where the first service operates. For example, if the first service is the sensing service, the target area describes the location area that the sensing service needs to sense, such as the Tracking Area Identifier (TAI) or Cell Identifier (CI) list or geographic location range that needs to be sensed. The target location of the first service may refer to the actual location where the first service functions. For example, if the first service is the sensing service, the target location describes the location information that the sensing service needs to sense. The indication information may be used to indicate to the access network device involved in establishing the user plane path, as well as to each core network element, the establishment of a user plane path where one end is the access network device.

The information of the first service server may be configured to describe the first service server.

The information of the first service server includes one or more of an identifier of the first service server, service area information of the first service server, service information supported by the first service server, an Internet Protocol (IP) address of the first service server, a Data Network Access Identifier (DNAI) of the first service server, a Data Network Name (DNN) of the first service server, and Single Network Slice Selection Assistance Information (S-NSSAI) supported by the first service server. The first service server may indicate the information of the first service server (which may be any of the aforementioned possibilities) to the first network element, so that the first network element can obtain accurate information about the first service server to support the establishment of a user plane connection between the first service server and the access network device.

The information of the access network device may be configured to describe the access network device. The information of the access network device includes an identifier of the access network device, an IP address of the access network device, functional information supported by the user plane connection, the Cell Identity (CI) list supported by the access network device, the Tracking Area ID (TAI) list supported by the access network device, and the S-NSSAI supported by the access network device, so that the first network element can effectively obtain the information of the access network device that needs to establish the user plane path, to support the establishment of the user plane path.

The functional information supported by user plane connection includes the functionality of the access network device supporting user plane path establishment and/or the functionality of the core network supporting user plane path establishment, which may be obtained based on local configuration information. Alternatively, the functional information supported by the user plane connection may also be transmitted within the core network or when the core network element interacts with the access network. The capability information of the access network supporting this function may be included in the information of the access network device, or in other information, such as included in the extended radio access network capability parameters, or may be an independent parameter.

In some embodiments, the user plane path may be configured to establish a user plane connection, where the user plane connection is configured to connect the access network device and the first service server, and the user plane connection is configured to transmit first service data, thereby achieving efficient transmission of service data originating from the access network device to the first service server.

In some embodiments, the first service server may send a sixth message to the first network element, wherein the sixth message may carry the first information. The first network element may receive the sixth message sent by the first service server and obtain the first information from the sixth message.

At step S3102, the first network element allocates a session identifier to the established PDU session.

In some embodiments, the session identifier is used to identify the PDU session, and the PDU session is configured to establish the user plane path.

In some embodiments, the first network element may allocate a session identifier to the established PDU session.

In some embodiments, the session identifier may be configured to identify the PDU session.

This session identifier is used to identify the session terminating at the access network device, at the access network device and core network elements such as the first network element, the second network element, and the third network element.

In some embodiments, the first network element may receive the session identifier sent by the first service server. That is, the session identifier is allocated by the first service server for the established PDU session, and the first network element may obtain the session identifier allocated for the established PDU session from the first service server. This can effectively improve the flexibility of obtaining the session identifier related to the PDU session and is suitable for personalized service application scenarios.

At step S3103, the first network element creates session management (SM) context of the PDU session.

In some embodiments, the PDU session may be associated with the DNN of the first service.

In some embodiments, the PDU session may be associated with S-NSSAI of the first service.

In some embodiments, the PDU session may be associated with information of the access network device.

In some embodiments, the PDU session may be associated with DNN and S-NSSAI of the first service.

In some embodiments, the PDU session may be associated with the DNN of the first service and information of the access network device.

In some embodiments, the PDU session may be associated with S-NSSAI of the first service and information of the access network device.

In some embodiments, the PDU session may be associated with the DNN and S-NSSAI of the first service, and information of the access network device.

In some embodiments, the PDU session is configured to establish a user plane path terminating at the access network device. The PDU session is associated with the DNN and/or S-NSSAI of the first service and/or information of the access network device, in order for the first network element to manage the PDU session accordingly (such as modifying or releasing the PDU session).

In some embodiments, the first network element may also create session management (SM) context related to the PDU session, to establish the user plane path in the PDU session management mechanism based on the created SM context.

At step S3104, the first network element determines a second network element according to the first information.

In some embodiments, the second network element is, for example, a UPF network element.

In some embodiments, the first network element may select the second network element by referring to the first information.

In some embodiments, there may be multiple candidate second network elements, and the first network element may select a suitable second network element by referring to the first information. The second network element may be, for example, a UPF network element that supports the N3 interface, a PDU Session Anchor (PSA) UPF network element, or an intermediate UPF network element.

In some embodiments, the second network element is configured to establish the user plane path.

In some embodiments, the first network element may select the second network element by referring to at least one of the following information: the indication information, the information of the access network device, the information of the first service server, the DNN associated with the user plane path, the S-NSSAI associated with the user plane path, the service area information, or the service location information.

In some embodiments, step 3104 may be performed before step S3114.

At step S3105, the first network element selects a third network element according to the first information.

In some embodiments, the third network element is, for example, an AMF network element.

In some embodiments, there may be multiple candidate third network elements, and the first network element may select a suitable third network element by referring to the first information (e.g. information of the access network device) and/or the functions supported by the access network device/core network for user plane path establishment. In some embodiments, since the third network element is configured to provide the access and mobility management function, it is possible to refer to the information of the access network device that needs to establish a user plane path and select a suitable third network element for that access network device.

In some embodiments, step S3105 may be performed before step S3106.

In some embodiments, there may be no limitation on the execution order between step S3104 and step S3105.

At step S3106, the first network element sends a first message to the third network element, wherein the first message is configured to transmit N1N2 information.

In some embodiments, the first network element may send the first message to the third network element, indicating core network tunnel information (Core Network Tunnel Info) of the second network element based on the first message, wherein the core network tunnel information is configured to establish the user plane path. In some embodiments, the first message may further include the indication information, which may be used to indicate to the access network device and each core network element involved in establishing the user plane path the establishment of the user plane path terminating at one end to the access network device.

In some embodiments, the core network tunnel information of the second network element and the indication information may be carried in the first message, and the core network tunnel information of the second network element and information indicating establishment of a user plane path may be indicated to the third network element by sending the first message to the third network element. In some embodiments, the indication information may be specifically used to indicate that the PDU session is configured to establish a user plane path.

Embodiments of the present disclosure can establish a user plane path with one end terminating at the access network device based on the process of establishing a PDU session. The SMF network element can initiate the establishment of a PDU session and indicate that the established PDU session is used to establish the user plane path. Each core network function (NF) element and (R)AN may maintain according to non-UE related PDU session.

That is to say, the PDU session is a non-UE related PDU session, or a type of the PDU session is a dedicated type. Dedicated type may indicate that the PDU session is a type used to establish a user plane path that terminates at one end to the access network device.

In other words, during the process of establishing a user plane path through the PDU session management mechanism, the first network element can indicate to the third network element that the PDU session is used to establish the user plane path, in order to support the third network element in forwarding the indication information to the access network device, so that the access network device can accurately know the function of the PDU session.

In some embodiments, the first message may include one or more of a requested Quality of Service (QoS) flow, user plane information of the first service server, and relevant QoS parameters of the requested QoS flow. By using the first message to indicate the core network tunnel information and the function of the PDU session to the third network element, the indication overhead of the core network tunnel information and the function of the PDU session can be effectively reduced.

In some embodiments, the first message may be sent by the first network element by calling the Namf_Communication_N1N2MessageTransfer service. In some embodiments, the Namf_Communication_N1N2MessageTransfer service can support the NF network element of the core network to transmit downlink N2 information to the access network device through the AMF network element. The Namf_Communication_N1N2MessageTransfer service may not be used to transmit downlink N1 information to the terminal through the AMF network element.

In some embodiments, the first message is, for example, the Namf_Communication_N1N2MessageTransfer message.

In some embodiments, the SMF network element may call the Namf_Communication_N1N2MessageTransfer service to send N2 SM context information (referred to as N2 SM information) to the (R)AN via the AMF network element. The N2 SM information may include the core network tunnel information of the selected N3 UPF and the indication information. In some embodiments, the N2 SM information may also include the requested QoS flow and/or user plane information of the SF network element (such as the IP address of the SF network element).

At step S3107, the third network element receives the first message sent by the first network element.

In some embodiments, the first network element sends the first message to the third network element, wherein the first message is configured to transmit N1N2 information. The third network element can receive the first message sent by the first network element and obtain the indication information and the core network tunnel information of the second network element from the first message.

At step S3108, the third network element sends a fourth message to the access network device, wherein the fourth message includes the indication information and the core network tunnel information.

In some embodiments, after obtaining the indication information and the core network tunnel information of the second network element from the first network element, the third network element can forward the indication information and the core network tunnel information of the second network element to the access network device. In some embodiments, the third network element may carry the indication information and the core network tunnel information of the second network element in the fourth message, and send the indication information and the core network tunnel information of the second network element to the access network device by sending the fourth message to the access network device, so that the access network device determines that a user plane path is needed to be established. In the process of establishing the user plane path, the core network tunnel information of the second network element can be referred to.

In some embodiments, during the process of establishing the user plane path through the PDU session management mechanism, the fourth message can be used as an N2 interface message to request the establishment of a PDU session. In some embodiments, the fourth message may be, for example, an N2 PDU Session request message. In some embodiments, the fourth message may also include the above-mentioned indication information, which is used to indicate that the PDU session is used to establish the user plane path. For example, the AMF network element can send an N2 PDU Session request message to the (R)AN, and the N2 PDU Session request message may carry N2 SM information. The N2 SM information may include the aforementioned indication information and core network tunnel information of the second network element.

At step S3109, the access network device receives the fourth message sent by the third network element.

In some embodiments, the access network device may receive the fourth message sent by the third network element.

In some embodiments, (R) AN may learn from the fourth message that the PDU session is used to establish a user plane path terminating in the access network, (R) AN may not need to allocate wireless network resources for the PDU session, and (R) AN may create and maintain the context of the PDU session that is not associated with any terminal, and establish the corresponding user plane path. In some embodiments, if the N2 SM information contains the user plane information of the first service server (user plane information refers to the relevant information of the first service server on the user plane, such as the IP address of the first service server), it can indicate (R) AN to use the user plane information of the first service server to package the service data.

At step S3110, the access network device sends a fifth message to the third network element, wherein the fifth message includes access network tunnel information.

In some embodiments, the access network device may also send the fifth message to the third network element, to indicate the access network tunnel information of the access network device based on the fifth message, wherein the access network tunnel information is used to establish the user plane path.

In some embodiments, during the process of establishing a user plane path through the PDU session management mechanism, the fifth message may be used as an N2 interface message in response to the PDU session establishment request. In some embodiments, the fifth message may carry the access network tunnel information of the access network device. In some embodiments, the fifth message may be, for example, an N2 PDU Session response message.

At step S3111, the third network element receives the fifth message sent by the access network device.

In some embodiments, after receiving the fifth message sent by the access network device, the third network element can obtain the access network tunnel information from the fifth message and forward the access network tunnel information to the first network element.

At step S3112, the third network element sends a second message to the first network element, wherein the second message is configured to request an update of the PDU session SM context.

In some embodiments, the second message includes the access network tunnel information of the access network device.

In some embodiments, during the establishment of the user plane path through the PDU session management mechanism, the second message may be sent by the third network element to the first network element by calling the Nsmf_PDUSession _UpdateSMContext service. The second message may be specifically, for example, an Nsmf_PDUSession_UpdateSMContext request message.

At step S3113, the first network element receives the second message sent by the third network element.

At step S3114, the first network element sends a third message to the second network element, wherein the third message includes the access network tunnel information and a related packet forwarding rule.

In some embodiments, the first network element receives the second message sent by the third network element, obtains the access network tunnel information from the second message, and send the access network tunnel information and related packet forwarding rule to the second network element.

In some embodiments, the forwarding rule of the user plane path includes a first rule indicating forwarding of a first service data packet associated with a QoS flow identifier (QFI). After establishing the user plane path terminated as above to the access network, the first service data packet can be effectively transmitted based on the established user plane path.

In some embodiments, the forwarding rule may include a second rule indicating forwarding of the first service data packet based on the destination address of the first service data. In some embodiments, the forwarding rule may include the aforementioned first rule and/or second rule. Thus, it can effectively enhance the flexibility of forwarding rule configuration, facilitate the flexible transmission of the first service data based on the established user plane path, and support the flexible and efficient sending of the first service data to the first service server.

In some embodiments, the forwarding rule is the first rule, which indicates the forwarding of the first service packet associated with the QFI, wherein the access network device is not aware of the user plane information of the first service server and/or the data packet generated by the access network device does not include the destination address of the first service data packet encapsulated with the user plane information of the first service server, which can effectively achieve transmitting the first service data based on the established user plane path by referring to the first rule, to support the efficient transmission of the first service data to the first service server.

In some embodiments, the forwarding rule is a second rule, which indicates forwarding the first service data packet based on the destination address of the first service data; wherein, the access network device obtains the user plane information of the first service server and the data packet generated by the access network device includes the destination address of the first service data packet encapsulated with the user plane information of the first service server, which can effectively achieve the transmission of the first service data based on the established user plane path according to the second rule, to support the efficient transmission of the first service data to the first service server.

The method for establishing a user plane path disclosed in embodiments of the present disclosure may include at least one of steps S3101 to S3114. For example, step S3101 can be implemented as an independent embodiment, step S3102 can be implemented as an independent embodiment, and so on, but not limited to this. Steps S3101+S3102 can be implemented as an independent embodiment, and steps S3101+S3102+S3103 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

In this embodiment, establishing a session and its user plane path terminated to the access network based on the PDU session management mechanism is implemented. The core network tunnel information of the selected second network element and the information indicating the establishment of the user plane path are provided to the access network device, and the access network tunnel information of the access network device is provided to the second network element, to support the establishment of the user plane path. When transmitting the first service data based on the established user plane path, it can effectively improve the transmission efficiency of service data originated from the access network device.

In embodiments of the present disclosure, one end of the user plane path is the access network device. For example, the user plane path may include two ends, one of which is connected to the access network device. The access network device is the device connected to one end of the user plane path, or it can be understood that the user plane path terminates at the access network device, or it can be understood that the user plane path is a special user plane path unrelated to the terminal. The user plane connection based on this user plane path is different from the current user plane connection originating from the terminal. The data of the user plane connection based on this user plane path terminates at one end at the access network device, such as the service data packet packaged and sent by the access network device or the service data packet received and parsed by the access network. The user plane path is used to connect the access network and the data network, where the data network is the data network to which the first service server belongs. The data network may be the exclusive data network of the first service server or a data network shared with other service servers.

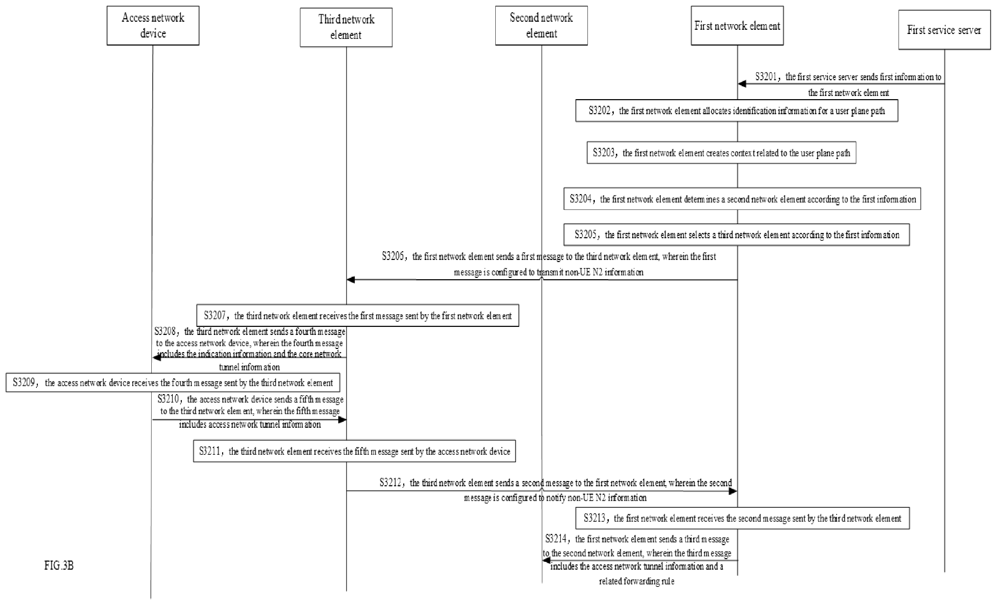

FIG. 3B is a schematic diagram illustrating an interaction in a method for establishing a user plane path according to an embodiment of the present disclosure. As shown in FIG. 3B, an embodiment involves a method for establishing a user plane path applicable to the communication system 100. In this embodiment, the establishment of the user plane path can be achieved through a Non-UE transmission mechanism between the SMF network element, AMF network element, and (R)AN, with one end of the user plane path being the access network device. The method includes the following steps.

At step S3201, a first service server sends first information to a first network element.

For description of step S3201, reference can be made to the above embodiments, which will not be repeated here.

At step S3202, the first network element allocates identification information for a user plane path.

In some embodiments, the first network element may allocate identification information to the user plane path, and the identification information is used to identify the user plane path.

In some embodiments, the first network element may allocate the identification information to the user plane path, and the user plane path may be associated with the DNN and/or S-NSSAI of the first service and/or information of the access network device, in order for the first network element to manage the user plane path accordingly (such as modifying or releasing the user plane path). In other embodiments, the first network element may also receive identification information sent by the first service server. That is to say, the identification information may be allocated to the user plane path by the first service server, and the first network element can obtain the identification information allocated to the user plane path from the first service server. Thus, it can effectively enhance the flexibility of obtaining the identification information related to the user plane path, and is effectively applicable to personalized service application scenarios.

At step S3203, the first network element creates context related to the user plane path.

In some embodiments, the user plane path may be associated with the DNN of the first service.

In some embodiments, the user plane path may be associated with the S-NSSAI of the first service.

In some embodiments, user plane paths may be associated with information of the access network device.

In some embodiments, the user plane path may be associated with the DNN and S-NSSAI of the first service.

In some embodiments, the user plane path may be associated with the DNN of the first service and information of the access network device.

In some embodiments, the user plane path may be associated with the S-NSSAI of the first service and information of the access network device.

In some embodiments, the user plane path may be associated with the DNN and S-NSSAI of the first service, and the information of the access network device.

In some embodiments, the first network element may also create the context related to the user plane path, to establish a non-terminal related user plane path based on the created context, that is, a user plane path that terminates to the access network device rather than to the terminal.

At step S3204, the first network element determines a second network element according to the first information.

In some embodiments, step S3204 may be performed before step S3214.

At step S3205, the first network element selects a third network element according to the first information.

In some embodiments, the first information may include information of the access network device, and the first network element may select the third network element based on the information of the access network device.

In some embodiments, step S3205 may be performed before step S3206.

In some embodiments, the execution order for S3204 and S3205 may not be limited.

For description of steps S3204-S3205, reference can be made to the above embodiments, which will not be repeated here.

At step S3206, the first network element sends a first message to the third network element, wherein the first message is configured to transmit non-UE N2 information.

In some embodiments, the first network element may send the first message to the third network element, indicating core network tunnel information of the second network element based on the first message, wherein the core network tunnel information is configured to establish the user plane path. In some embodiments, the first message may also include indication information, which may be configured to indicate to the access network device and each core network element involved in establishing the user plane path the establishment of a user plane path with one end as the access network device. In some embodiments, the core network tunnel information of the second network element and the indication information may be carried in the first message, and the core network tunnel information of the second network element and the information indicating the establishment of the user plane path may be indicated to the third network element by sending the first message to the third network element.

In some embodiments, the first message may also include one or more of the requested Quality of Service (QoS) flow, user plane information of the first service server, and relevant QoS parameters of the requested QoS flow. By using the first message to indicate the core network tunnel information and the indication information to the third network element, the indication overhead of the core network tunnel information and the indication information can be effectively reduced.

In some embodiments, the first message may be sent by the first network element by calling the Namf_Communication_NonUeN2MessageTransfer service. The first message may be specifically, for example, the Namf_Communication_NonUeN2MessageTransfer message. For example, the SMF network element can call the Namf_Communication _NonUeN2MessageTransfer service to transfer non-UE N2 information to the (R)AN. The non-UE N2 information may include the core network tunnel information of the selected N3 UPF and information indicating the establishment of the user plane path.

In some embodiments, the non-UE N2 information may also include the requested QoS flow and/or user plane information of the first service server (such as the IP address of the first service server).

In some embodiments, the first network element subscribes to the non-UE N2 information from the third network element, and/or the first network element subscribes to the non-UE N2 information from each candidate third network element connected to the access network device. The third network element belongs to multiple candidate third network elements, so that the first network element can timely obtain the non-UE N2 information from the selected third network element. This subscription operation may be completed at the same time as sending the first message or before or after sending the first message. The non-UE N2 information refers to information unrelated to the terminal that is transmitted to the access network through the N2 interface.

At step S3207, the third network element receives the first message sent by the first network element.

In some embodiments, the third network element may receive the first message sent by the first network element and obtain the core network tunnel information of the second network element and the indication information from the first message. In some embodiments, the third network element may also obtain the requested QoS flow and/or user plane information of the first service server (such as the IP address of the first service server) from the first message.

At step S3208, the third network element sends a fourth message to the access network device, wherein the fourth message includes the indication information and the core network tunnel information.

In some embodiments, after obtaining the core network tunnel information of the second network element and the indication information from the first network element, the third network element can forward the core network tunnel information of the second network element and the indication information to the access network device. In some embodiments, the third network element may carry the core network tunnel information of the second network element and the indication information in the fourth message, and indicate the core network tunnel information of the second network element and the indication information to the access network device by sending the fourth message to the access network device. In some embodiments, the fourth message may also include second information, which is used to request the establishment of a user plane connection between the access network device and the first service server through the user plane path.

In some embodiments, during the process of establishing a user plane path terminating at one end to the access network, the fourth message may be used to request transmission of the non-UE N2 information. In some embodiments, the fourth message may be, for example, an N2 Transport request message. For example, the AMF network element may send the N2 Transport request message to the (R) AN, which may carry the core network tunnel information and the indication information.

At step S3209, the access network device receives the fourth message sent by the third network element.

In some embodiments, the access network device may receive the fourth message sent by the third network element. For example, (R) AN may obtain the core network tunnel information, the indication information, and the information requesting the establishment of the user plane path based on the fourth message. In some embodiments, the fourth message may also include user plane information of the first service server (such as the IP address of the first service server), which may indicate (R) AN to use the user plane information of the first service server to package the service data.

At step S3210, the access network device sends a fifth message to the third network element, wherein the fifth message includes access network tunnel information.

In some embodiments, the access network device may also send a fifth message to the third network element to indicate the access network tunnel information of the access network device based on the fifth message, wherein the access network tunnel information is configured to establish the user plane path. In some embodiments, the fifth message may also include third information, which is configured to respond to the request to establish the user plane connection, supporting the access network device to promptly indicate to the third network element the status of establishing the user plane connection.

In some embodiments, the fifth message may be used to respond to the transmission request for non-UE N2 information, during the process of establishing a user plane path terminating in the access network through the non-UE transfer mechanism. The fifth message may be specifically, for example, an N2 Transport response message.

At step S3211, the third network element receives the fifth message sent by the access network device.

In some embodiments, after receiving the fifth message sent by the access network device, the third network element can obtain the access network tunnel information from the fifth message and send the access network tunnel information to the first network element.

At step S3212, the third network element sends a second message to the first network element, wherein the second message is configured to notify non-UE N2 information.

In some embodiments, the second message includes the access network tunnel information of the access network device.

In some embodiments, the second message may also include the aforementioned third information.

In some embodiments, in the process of establishing a user plane path through a non-UE transfer mechanism, i.e., a mechanism unrelated to the terminal, the second message may be sent by the third network element by calling the Namf_Communication_NonUeN2InfoNotify service. The second message may be specifically, for example, the Namf_Communication_NonUeN2InfoNotify message.

At step S3213, the first network element receives the second message sent by the third network element.

At step S3214, the first network element sends a third message to the second network element, wherein the third message includes the access network tunnel information and a related forwarding rule.

For description of steps S3213-S3214, reference can be made to the above embodiments, which will not be repeated here.

The method for establishing a user plane path disclosed in embodiments of the present disclosure may include at least one of steps S3201 to S3214. For example, step S3201 can be implemented as an independent embodiment, step S3202 can be implemented as an independent embodiment, and so on, but not limited to this. Steps S3201+S3202 can be implemented as an independent embodiment, and steps S3201+S3202+S3203 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

In this embodiment, a user plane path terminating in the access network is established based on a Non-UE transfer mechanism (i.e., a mechanism unrelated to the terminal). The core network tunnel information of the selected second network element and the information indicating the establishment of the user plane path are provided to the access network device, and the access network tunnel information of the access network device is provided to the second network element, to support the establishment of the user plane path. When transmitting the first service data based on the established user plane path, it can effectively improve the efficiency of service data transmission from the access network device.

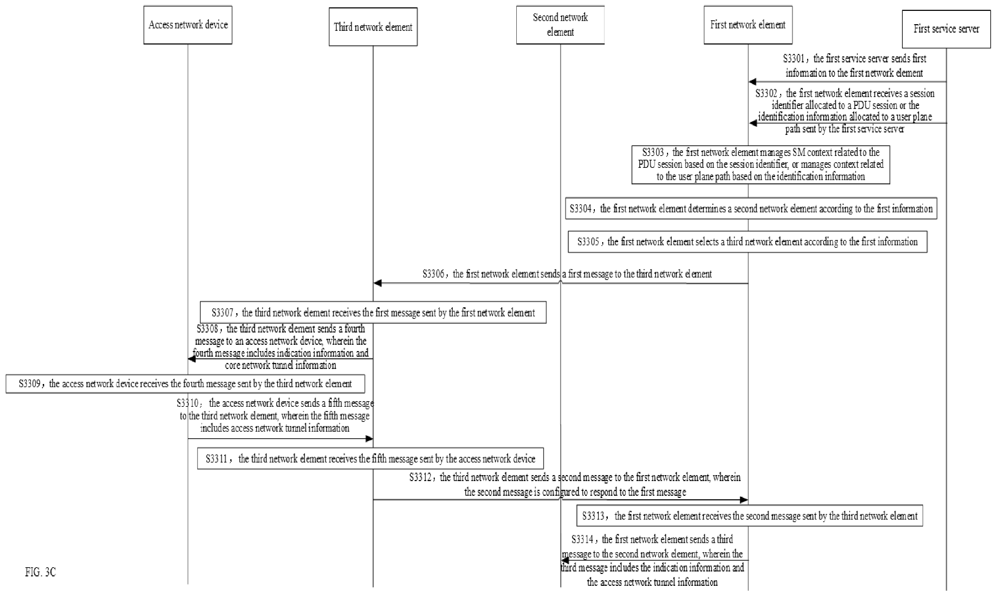

FIG. 3C is a schematic diagram illustrating an interaction in a method for establishing a user plane path according to another embodiment of the present disclosure. As shown in FIG. 3C, an embodiment involves a method for establishing a user plane path applicable to the communication system 100. In this embodiment, the user plane path can be established. The user plane path may include two ends, with one end connected to an access network device. The method includes the following steps.

At step S3301, a first service server sends first information to a first network element.

At step S3302, the first network element receives a session identifier allocated to a PDU session or the identification information allocated to a user plane path sent by the first service server.

At step S3303, the first network element manages SM context related to the PDU session based on the session identifier, or manages context related to the user plane path based on the identification information.

At step S3304, the first network element determines a second network element according to the first information.

At step S3305, the first network element selects a third network element according to the first information.

In some embodiments, step S3305 and step S3301 are implemented independently, and step S3305 may also be included in step S3301 for implementation, which is not limited.

At step S3306, the first network element sends a first message to the third network element.

At step S3307, the third network element receives the first message sent by the first network element.

At step S3308, the third network element sends a fourth message to an access network device, wherein the fourth message includes indication information and core network tunnel information.

At step S3309, the access network device receives the fourth message sent by the third network element.

At step S3310, the access network device sends a fifth message to the third network element, wherein the fifth message includes access network tunnel information.

At step S3311, the third network element receives the fifth message sent by the access network device.

At step S3312, the third network element sends a second message to the first network element, wherein the second message is configured to respond to the first message.

At step S3313, the first network element receives the second message sent by the third network element.

At step S3314, the first network element sends a third message to the second network element, wherein the third message includes the indication information and the access network tunnel information.

For description of steps S3313 to S3314, reference can be made to the above embodiments, which will not be repeated here.

The method for establishing a user plane path disclosed in embodiments of the present disclosure may include at least one of steps S3301 to S3314. For example, step S3301 can be implemented as an independent embodiment, step S3302 can be implemented as an independent embodiment, and so on, but not limited to this. Steps S3301+S3302 can be implemented as an independent embodiment, and steps S3301+S3302+S3303 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

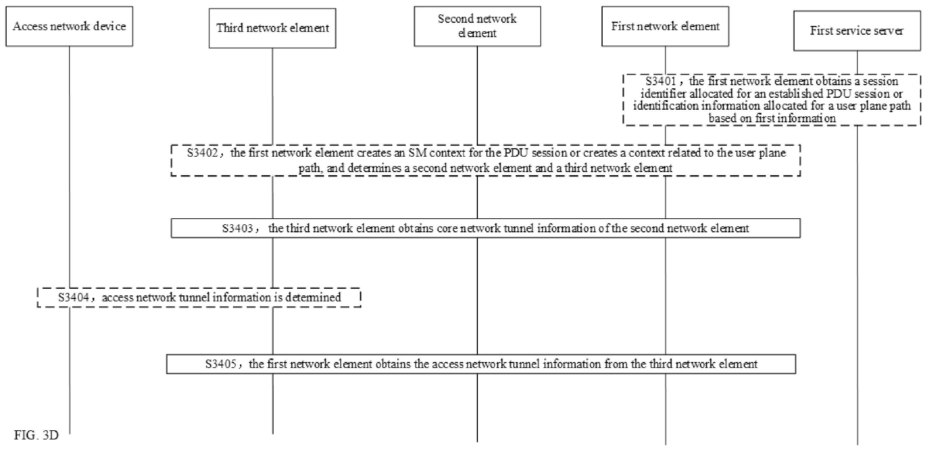

FIG. 3D is a schematic diagram illustrating an interaction in a method for establishing a user plane path according to another embodiment of the present disclosure. As shown in FIG. 3D, an embodiment involves a method for establishing a user plane path applicable to the communication system 100. In this embodiment, the user plane path can be established. The user plane path may include two ends, with one end connected to an access network device. The method includes the following steps.

At step S3401, a first network element obtains a session identifier allocated for an established PDU session or identification information allocated for a user plane path based on first information.

For definition of the first information, reference can be made to the description above, which will not be repeated here. It is worth noting that the first information does not necessarily come from the first service server. For example, the first information may be determined by the first network element itself, and after determining the first information, the first network element notifies the first service server to establish a user plane path or PDU session.

At step S3402, the first network element creates an SM context for the PDU session or creates a context related to the user plane path, and determines a second network element and a third network element.

At step S3403, the third network element obtains core network tunnel information of the second network element.

At step S3404, access network tunnel information is determined.

The third network element can independently determine the access network tunnel information, for example, relying on the information before executing step S3404. Alternatively, as mentioned earlier, the third network element and the access network device determine the access network tunnel information.

At step S3405, the first network element obtains the access network tunnel information from the third network element.

It can be understood that after determining the core network tunnel information and/or access network tunnel information, the user plane connection of the present disclosure can be established.

Alternatively, the second network element obtains the access network tunnel information from the third network element, which may be done by using the first network element as a bridge to obtain the access network tunnel information from the third network element.

For description of steps S3401 to S3405, reference can be made to the above embodiments, which will not be repeated here.

The method for establishing a user plane path disclosed in embodiments of the present disclosure may include at least one of steps S3401 to S3405. For example, step S3401 can be implemented as an independent embodiment, step S3402 can be implemented as an independent embodiment, and so on, but not limited to this. Steps S3401+S3402 can be implemented as an independent embodiment, and steps S3401+S3402+S3403 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

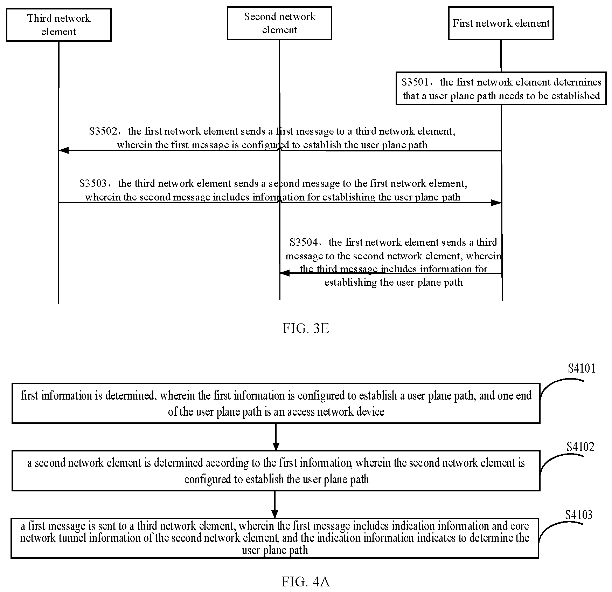

FIG. 3E is a schematic diagram illustrating an interaction in a method for establishing a user plane path according to another embodiment of the present disclosure. As shown in FIG. 3E, an embodiment involves a method for establishing a user plane path applicable to the communication system 100. In this embodiment, the user plane path can be established. The user plane path may include two ends, with one end connected to an access network device. The method includes the following steps.

At step S3501, a first network element determines that a user plane path needs to be established.

The first network element can determine whether a user plane path needs to be established through various methods, which are not limited to the implementations mentioned above. For the definition of the user interface path, reference can be made to the text above, which will not be repeated here.

At step S3502, the first network element sends a first message to a third network element, wherein the first message is configured to establish the user plane path.

At step S3503, the third network element sends a second message to the first network element, wherein the second message includes information for establishing the user plane path.

At step S3504, the first network element sends a third message to the second network element, wherein the third message includes information for establishing the user plane path.

For description of steps S3501 to S3504, reference can be made to the above embodiments, which will not be repeated here. Moreover, in steps S3502 to S3504, although both the second message and the third message are used to establish the user plane path, it does not mean that the second message and the third message carry the same content.

The method for establishing a user plane path disclosed in embodiments of the present disclosure may include at least one of steps S3501 to S3504. For example, step S3501 can be implemented as an independent embodiment, step S3502 can be implemented as an independent embodiment, and so on, but not limited to this. Steps S3501+S3302 can be implemented as an independent embodiment, and steps S3501+S3502+S3503 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

FIG. 4A is a schematic diagram illustrating interaction in a method for establishing a user plane path according to another embodiment of the present disclosure. As shown in FIG. 4A, an embodiment of the present disclosure relates to a method for establishing a user plane path applicable to a first network element. The method includes the following steps.

At step S4101, first information is determined, wherein the first information is configured to establish a user plane path, and one end of the user plane path is an access network device.

At step S4102, a second network element is determined according to the first information, wherein the second network element is configured to establish the user plane path.

At step S4103, a first message is sent to a third network element, wherein the first message includes indication information and core network tunnel information of the second network element, and the indication information indicates to determine the user plane path.

The method for establishing a user plane path disclosed in embodiments of the present disclosure may include at least one of steps S4101 to S4103. For example, step S4101 can be implemented as an independent embodiment, step S4102 can be implemented as an independent embodiment, and so on, but not limited to this. Steps S4101+S4102 can be implemented as an independent embodiment, and steps S4101+S4102+S4103 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

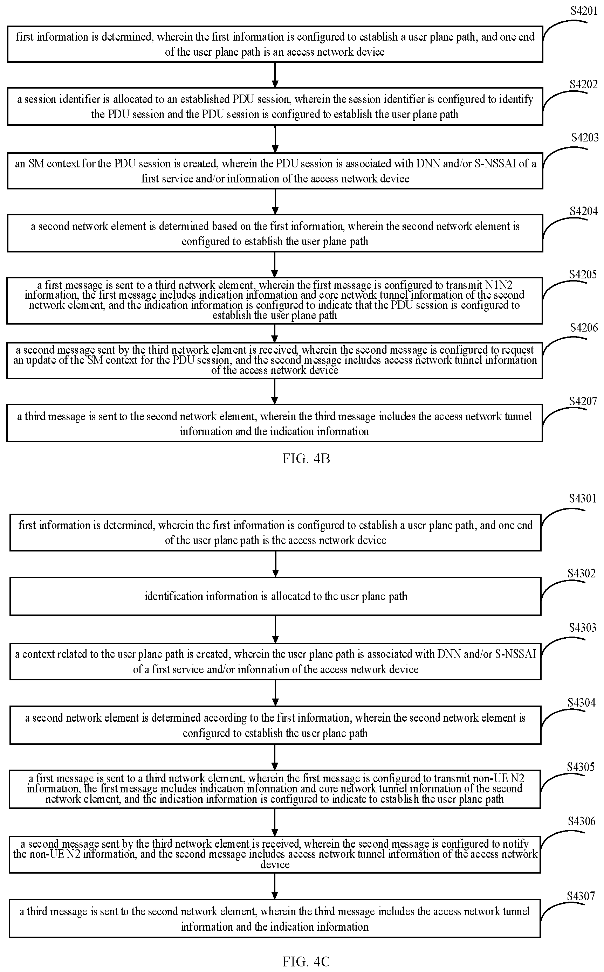

FIG. 4B is a schematic diagram illustrating interaction in a method for establishing a user plane path according to another embodiment of the present disclosure. As shown in FIG. 4B, an embodiment of the present disclosure relates to a method for establishing a user plane path applicable to a first network element. The method includes the following steps.

At step S4201, first information is determined, wherein the first information is configured to establish a user plane path, and one end of the user plane path is an access network device.

At step S4202, a session identifier is allocated to an established PDU session, wherein the session identifier is configured to identify the PDU session and the PDU session is configured to establish the user plane path.

At step S4203, an SM context for the PDU session is created, wherein the PDU session is associated with DNN and/or S-NSSAI of a first service and/or information of the access network device.

At step S4204, a second network element is determined based on the first information, wherein the second network element is configured to establish the user plane path.

At step S4205, a first message is sent to a third network element, wherein the first message is configured to transmit N1N2 information, the first message includes indication information and core network tunnel information of the second network element, and the indication information is configured to indicate that the PDU session is configured to establish the user plane path.

At step S4206, a second message sent by the third network element is received, wherein the second message is configured to request an update of the SM context for the PDU session, and the second message includes access network tunnel information of the access network device.

At step S4207, a third message is sent to the second network element, wherein the third message includes the access network tunnel information and the indication information.

The method for establishing a user plane path disclosed in embodiments of the present disclosure may include at least one of steps S4201 to S4207. For example, step S4201 can be implemented as an independent embodiment, step S4202 can be implemented as an independent embodiment, and so on, but not limited to this. Steps S4201+S4202 can be implemented as an independent embodiment, and steps S4201+S4202+S4203 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

FIG. 4C is a schematic diagram illustrating interaction in a method for establishing a user plane path according to another embodiment of the present disclosure. As shown in FIG. 4C, an embodiment of the present disclosure relates to a method for establishing a user plane path applicable to a first network element. The method includes the following steps.

At step S4301, first information is determined, wherein the first information is configured to establish a user plane path, and one end of the user plane path is the access network device.

At step S4302, identification information is allocated to the user plane path.

At step S4303, a context related to the user plane path is created, wherein the user plane path is associated with DNN and/or S-NSSAI of a first service and/or information of the access network device.

At step S4304, a second network element is determined according to the first information, wherein the second network element is configured to establish the user plane path.

At step S4305, a first message is sent to a third network element, wherein the first message is configured to transmit non-UE N2 information, the first message includes indication information and core network tunnel information of the second network element, and the indication information is configured to indicate to establish the user plane path.

At step S4306, a second message sent by the third network element is received, wherein the second message is configured to notify the non-UE N2 information, and the second message includes access network tunnel information of the access network device.

At step S4307, a third message is sent to the second network element, wherein the third message includes the access network tunnel information and the indication information.

The method for establishing a user plane path disclosed in embodiments of the present disclosure may include at least one of steps S4301 to S4307. For example, step S4301 can be implemented as an independent embodiment, step S4302 can be implemented as an independent embodiment, and so on, but not limited to this. Steps S4301+S4302 can be implemented as an independent embodiment, and steps S4301+S4302+S4303 can be implemented as an independent embodiment, but are not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

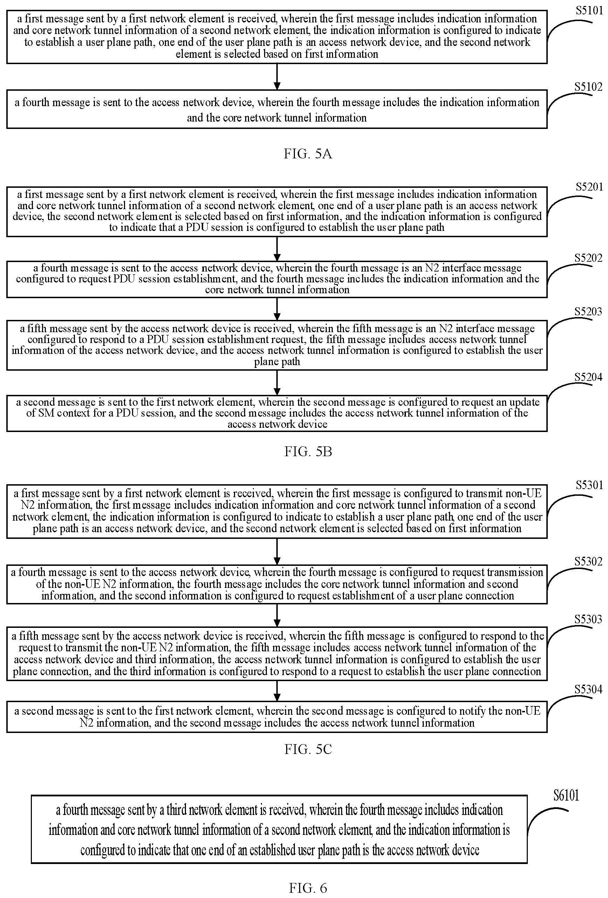

FIG. 5A is a schematic diagram illustrating interaction in a method for establishing a user plane path according to another embodiment of the present disclosure. As shown in FIG. 5A, an embodiment of the present disclosure relates to a method for establishing a user plane path applicable to a third network element. The method includes the following steps.

At step S5101, a first message sent by a first network element is received, wherein the first message includes indication information and core network tunnel information of a second network element, the indication information is configured to indicate to establish a user plane path, one end of the user plane path is an access network device, and the second network element is selected based on first information.

At step S5102, a fourth message is sent to the access network device, wherein the fourth message includes the indication information and the core network tunnel information.

The method for establishing a user plane path disclosed in embodiments of the present disclosure may include at least one of steps S5101 to S5102. For example, step S5101 can be implemented as an independent embodiment, and step S5102 can be implemented as an independent embodiment, but not limited to these. Steps S5101+S5102 can be implemented as an independent embodiment, but not limited to this.

In this embodiment or implementation, each step can be independent, arbitrarily combined, or exchanged in order without contradiction. Optional implementations or examples can be arbitrarily combined, and can be arbitrarily combined with any step of other embodiments or implementations.

FIG. 5B is a schematic diagram illustrating interaction in a method for establishing a user plane path according to another embodiment of the present disclosure. As shown in FIG. 5B, an embodiment of the present disclosure relates to a method for establishing a user plane path applicable to a third network element. The method includes the following steps.

At step S5201, a first message sent by a first network element is received, wherein the first message includes indication information and core network tunnel information of a second network element, one end of a user plane path is an access network device, the second network element is selected based on first information, and the indication information is configured to indicate that a PDU session is configured to establish the user plane path.

At step S5202, a fourth message is sent to the access network device, wherein the fourth message is an N2 interface message configured to request PDU session establishment, and the fourth message includes the indication information and the core network tunnel information.

At step S5203, a fifth message sent by the access network device is received, wherein the fifth message is an N2 interface message configured to respond to a PDU session establishment request, the fifth message includes access network tunnel information of the access network device, and the access network tunnel information is configured to establish the user plane path.

At step S5204, a second message is sent to the first network element, wherein the second message is configured to request an update of SM context for a PDU session, and the second message includes the access network tunnel information of the access network device.

The method for establishing a user plane path disclosed in embodiments of the present disclosure may include at least one of steps S5201 to S5204. For example, step S5201 can be implemented as an independent embodiment, step S5202 can be implemented as an independent embodiment, and so on, but not limited to these. Steps S5101+S5102 can be implemented as an independent embodiment, and steps S5101+S5102+S5103 can be implemented as an independent embodiment, but not limited to this.

In this embodiment or implementation, each step can be independent, arbitrarily combined, or exchanged in order without contradiction. Optional implementations or examples can be arbitrarily combined, and can be arbitrarily combined with any step of other embodiments or implementations.

FIG. 5C is a schematic diagram illustrating interaction in a method for establishing a user plane path according to yet another embodiment of the present disclosure. As shown in FIG. 5C, an embodiment of the present disclosure relates to a method for establishing a user plane path applicable to a third network element. The method includes the following steps.

At step S5301, a first message sent by a first network element is received, wherein the first message is configured to transmit non-UE N2 information, the first message includes indication information and core network tunnel information of a second network element, the indication information is configured to indicate to establish a user plane path, one end of the user plane path is an access network device, and the second network element is selected based on first information.

At step S5302, a fourth message is sent to the access network device, wherein the fourth message is configured to request transmission of the non-UE N2 information, the fourth message includes the core network tunnel information and second information, and the second information is configured to request establishment of a user plane connection.

At step S5303, a fifth message sent by the access network device is received, wherein the fifth message is configured to respond to the request to transmit the non-UE N2 information, the fifth message includes access network tunnel information of the access network device and third information, the access network tunnel information is configured to establish the user plane connection, and the third information is configured to respond to a request to establish the user plane connection.

At step S5304, a second message is sent to the first network element, wherein the second message is configured to notify the non-UE N2 information, and the second message includes the access network tunnel information.

The method for establishing a user plane path disclosed in embodiments of the present disclosure may include at least one of steps S5301 to S5304. For example, step S5301 can be implemented as an independent embodiment, step S5302 can be implemented as an independent embodiment, and so on, but not limited to these. Steps S5301+S5302 can be implemented as an independent embodiment, and steps S5301+S5302+S5303 can be implemented as an independent embodiment, but not limited to this.

In this embodiment or implementation, each step can be independent, arbitrarily combined, or exchanged in order without contradiction. Optional implementations or examples can be arbitrarily combined, and can be arbitrarily combined with any step of other embodiments or implementations.

FIG. 6 is a schematic diagram illustrating interaction in a method for establishing a user plane path according to yet another embodiment of the present disclosure. As shown in FIG. 6, an embodiment of the present disclosure relates to a method for establishing a user plane path applicable to an access network device. The method includes the following step.

At step S6101, a fourth message sent by a third network element is received, wherein the fourth message includes indication information and core network tunnel information of a second network element, and the indication information is configured to indicate that one end of an established user plane path is the access network device.

The method for establishing a user plane path disclosed in embodiments of the present disclosure may include step S6101. For example, step S6101 can be implemented as an independent embodiment, but not limited to this.

In this embodiment or implementation, each step can be independent, arbitrarily combined, or exchanged in order without contradiction. Optional implementations or examples can be arbitrarily combined, and can be arbitrarily combined with any step of other embodiments or implementations.

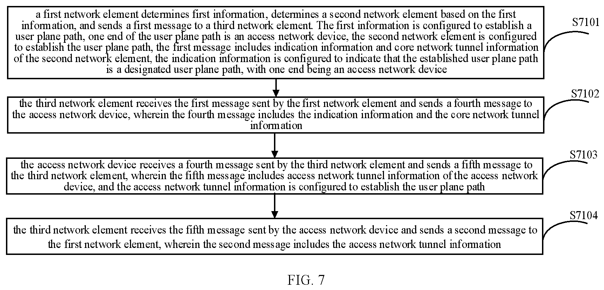

FIG. 7 is a schematic diagram illustrating interaction in a method for establishing a user plane path according to yet another embodiment of the present disclosure. As shown in FIG. 7, an embodiment of the present disclosure relates to a method for establishing a user plane path applicable to a communication system. The method includes the following steps.

At step S7101, a first network element determines first information, determines a second network element based on the first information, and sends a first message to a third network element. The first information is configured to establish a user plane path, one end of the user plane path is an access network device, the second network element is configured to establish the user plane path, the first message includes indication information and core network tunnel information of the second network element, the indication information is configured to indicate that the established user plane path is a designated user plane path, with one end being an access network device.

At step S7102, the third network element receives the first message sent by the first network element and sends a fourth message to the access network device, wherein the fourth message includes the indication information and the core network tunnel information.

At step S7103, the access network device receives a fourth message sent by the third network element and sends a fifth message to the third network element, wherein the fifth message includes access network tunnel information of the access network device, and the access network tunnel information is configured to establish the user plane path.

At step S7104, the third network element receives the fifth message sent by the access network device and sends a second message to the first network element, wherein the second message includes the access network tunnel information.

The method for establishing a user plane path disclosed in embodiments of the present disclosure may include at least one of steps S7101 to S7104. For example, step S7101 can be implemented as an independent embodiment, step S7102 can be implemented as an independent embodiment, and so on, but not limited to these. Steps S7101+S7102 can be implemented as an independent embodiment, and steps S7101+S7102+S7103 can be implemented as an independent embodiment, but not limited to these.

In this embodiment or implementation, each step can be independent, arbitrarily combined, or exchanged in order without contradiction. Optional implementations or examples can be arbitrarily combined, and can be arbitrarily combined with any step of other embodiments or implementations.

The following is an exemplary introduction to the above method.

Optional Example: In the following embodiments, the first service is taken as the sensing service, the first service data is taken as the sensing data, and the first service server is taken as the application server (specifically, SF network element) for example.

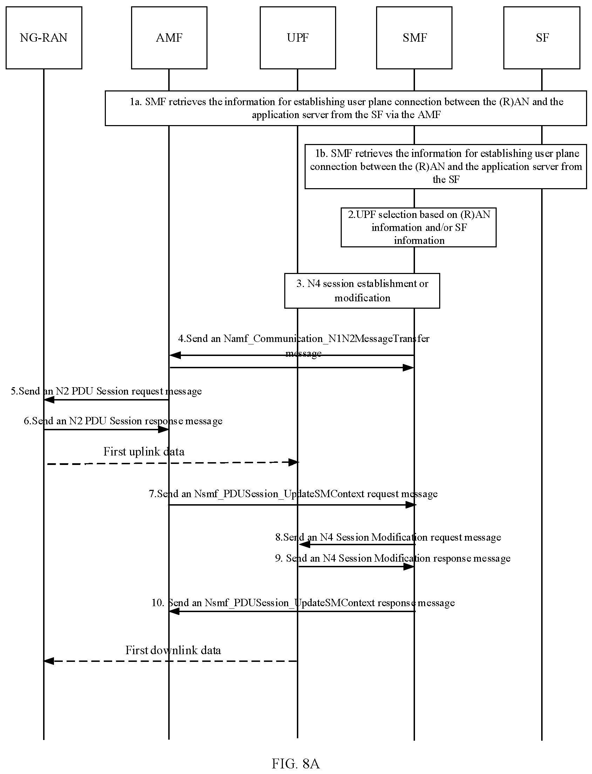

As shown in FIG. 8A, FIG. 8A is a schematic diagram of interaction in a method for establishing a user plane path according to still another embodiment of the present disclosure. As shown in FIG. 8A, in this embodiment of the present disclosure, including an AMF network element, a UPF network element, an SMF network element, an SF network element, and a (R)AN, with the (R)AN being the Next Generation Radio Access Network (NG-RAN) is taken as an example.

In an embodiment of the present disclosure, a user plane path between the (R)AN and the application server can be established through a PDU session management mechanism.

In an embodiment of the present disclosure, the application server is, for example, an SF network element.

In an embodiment of the present disclosure, to establish the user plane path between (R)AN and the application server, the PDU session management mechanism implemented on (R)AN, SMF and UPF can be reused with the following modification: in an embodiment of the present disclosure, the PDU session is a dedicated type that is not associated with any UE and UE is not involved. The PDU session is used to establish a user plane path. The ID (an optional example of the session identifier) is allocated to the PDU session at the SMF network element, or the SMF network element can obtain the ID allocated to the PDU session from the SF network element. In an embodiment of the present disclosure, the user plane path between (R)AN and the SF network element can be established along (R)AN-UPF network element-SF network element.

In an embodiment of the present disclosure, the sensing service may be an optional example of using the user plane path between the (R) AN and the application server to transmit the service data. It can also support the transmission of service data for any other service, for example, service data can be transmitted from the (R)AN to the first service server through the user plane. For example, the service data can be transmitted to the corresponding network function (NF) element of CN, such as the LMF for the positioning service.

1a. The SMF network element retrieves the information for establishing user plane connection between the (R)AN and the application server from the SF network element via the AMF network element.

1b. The SMF network element retrieves the information for establishing user plane connection between the (R)AN and the application server from the SF network element.

In some embodiments, the SF network element may receive sensing service request(s) from the UE, the AF network element, or 5GC NF, and the SF network element may also determine or receive the information that (R)AN collects/generates 3GPP sensing data and/or non-3GPP sensing data.

In some embodiments, the SF network element may determine to establish a user plane connection with the (R) AN.

In some embodiments, the SF network element may also send a user plane connection establishment request to the SMF network element.

In some embodiments, the SF network element may determine the mode of the sensing service and send the sensing service request(s) to the SMF network element based on the determined mode. The SMF network element may determine the information to establish a user plane connection between the (R)AN and the application server.

In some embodiments, if the SMF network element does not receive information from the (R)AN, the information to establish the user plane connection between the (R)AN and the application server can be determined based on the area or location for collecting the sensing data.

2. The UPF network element is selected based on (R)AN information and/or information of the SF network element.

In some embodiments, the SMF network element may refer to the information of (R)AN and/or the information of the SF network element to select the UPF network element.

In some embodiments, the SMF network element may refer to the information of (R)AN to select the UPF network element.

In some embodiments, the SMF network element may refer to the information of the SF network element to select the UPF network element.

In some embodiments, SMF network elements may refer to the information of (R)AN and the information of the SF network element to select the UPF network element.

In some embodiments, N3 UPF can be selected based on the information of the (R)AN to be connected.

In some embodiments, the UPF network element can be selected by referring to the TAI list or CI list supported by the (R)AN.

In some embodiments, N3 UPF can be selected based on the (R)AN information received in step 1a or 1b.

In some embodiments, if the information of the (R)AN is not available, but the area or location for collecting the sensing data is available, the N3 UPF can be selected based on the available area or location for collecting the sensing data, and the information of the (R)AN can be determined.

In some embodiments, the PDU session anchor (PSA) UPF network element can be selected based on the information of the (R)AN and the information of the SF network element.

In some embodiments, the N3 UPF network element and PSA UPF network element may be collocated together, or the intermediate UPF network element between the N3 UPF network element and the PSA UPF network element may be included too.

In some embodiments, in order to maintain and manage the user plane connection based on step 1, the SMF network element can allocate a PDU session ID and create the related context which may be associated with the DNN and/or S-NSSAI for the sensing service and/or the (R)AN to be connected.

In some embodiments, the PDU session ID can also be allocated by the SF network element, and the PDU session ID can be sent to the SMF network element based on step 1a or 1b above.

For the description of the following steps, the UPF may be, for example, N3 UPF, PSA UPF, and intermediate UPF selected above to support the establishment of the user plane connection.

### 3. N4 session establishment or modification

In some embodiments, the SMF network element may perform N4 Session Establishment with the UPF network element selected in step 2.

4. The SMF network element sends the Namf_Communication_N1N2MessageTransfer message to the AMF network element.

In some embodiments, the SMF may invoke Namf_Communication N1N2MessageTransfer service to transfer the N2 interface SM context information (can be abbreviated as N2SM information) to the (R)AN via the AMF network element. The N2 SM information may include the core network tunnel information of the selected N3 UPF, as well as another information that can be used to indicate that the PDU session is of a dedicated type, not associated with any UE, and that the relevant user plane path terminates at the access network.

In some embodiments, the N2 SM information may also include the requested QoS flow and/or user plane information of the SF network element (such as the IP address of the SF network element).

In some embodiments, the AMF network element may create the context for the PDU session of dedicated type not associated with any UE and records the related information e.g. the PDU session ID, the SMF ID, the (R)AN information.

In some embodiments, the SMF network element can also select an AMF network element based on the information of the (R)AN to be connected.

In some embodiments, the AMF network element can be selected by referring to the TAI list or CI list supported by (R)AN, and/or the capability supported for the non-UE user plane connection, i.e. the capability for the non-UE related user plane path terminating at the access network.

5. The AMF network element sends the N2 PDU Session Request message to the (R)AN.

In some embodiments, the N2 PDU Session Request message may be, for example, an N2 PDU Session Request.

In some embodiments, the AMF network element may send an N2 PDU Session request message to the (R) AN, which may carry the N2 SM information from step 4.

In some embodiments, the (R) AN may know that the PDU session is of a dedicated type that is not associated with any UE, and the relevant user plane path terminates at the access network. The (R)AN does not need to allocate wireless network resources for the PDU session, and the (R)AN creates and maintains the context of the PDU session without association with any UE.

In some embodiments, if the N2 SM information contains the user plane information of the SF network element (such as the IP address of the SF network element), it indicates that the sensing data generated from the (R)AN should be packeted with user plane information of the SF network element, for example, the destination address of the packets packeted by the (R)AN is set with the IP address of the SF network element.

6. The (R)AN sends an N2 PDU Session response message to the AMF network element.

In some embodiments, the N2 PDU Session response message may be, for example, an N2 PDU Session Response.

In some embodiments, the N2 PDU Session response message may include access network (AN) tunnel information required to establish the user plane connection.

In some embodiments, the N2 PDU Session response message may include the ability of (R)AN to generate the sensing data packet according to step 5, i.e. whether it supports packaging using the user plane information of the SF network element, for example, (R)AN uses the IP address of the SF network element to set the destination address of the data packets packaged by (R)AN.

7. The AMF network element sends the Nsmf_PDUSession_UpdateSMContext request message to the SMF network element.

In some embodiments, the Nsmf_PDUSession_UpdateSMContext request message may be, for example, Nsmf_PDUSession_UpdateSMContext Request.

In some embodiments, the AMF network element may forward the N2 SM information received from the (R)AN to the SMF network element.

In some embodiments, the N2 SM information may include the access network tunnel information described in step 6 and/or the ability of the (R)AN to generate sensing data packets, i.e. whether the (R)AN supports packaging using the user plane information of the SF network element, such as setting the destination address of the data packets packaged by the (R)AN using the IP address of the SF network element.

8. The SMF network element sends an N4 Session Modification request message to the UPF network element.

In some embodiments, the N4 Session Modification request message may be, for example, an N4 Session Modification Request.

9. The UPF network element sends an N4 Session Modification response message to the SMF network element.

In some embodiments, the N4 Session Modification response message may be, for example, an N4 Session Modification Response.

In some embodiments, the SMF network element can interact with the UPF network element to modify the N4 session.

In some embodiments, the SMF network element may provide the access network tunnel information and the corresponding forwarding rules to the UPF network element.

In some embodiments, if the user plane information of the SF network element (such as the IP address of the SF network element) has not been sent to the (R)AN and/or the (R)AN does not support using the user plane information of the SF network element to package and generate the sensing packet, forwarding rules may be configured per QFI.

In some embodiments, all the packets associated with identified QFI can be forwarded to the SF network element, which requires that the QFI is dedicated for transferring the sensing data to the SF network element for the required sensing service.

In some embodiments, if the user plane information of the SF network element (such as the IP address of the SF network element) is sent to the (R)AN and the (R)AN supports packaging and generating sensing data packets using the user plane information of the SF network element, the forwarding rule can be configured based on the destination address of the sensing data packets sent to the SF network element.

10. The SMF network element sends an Nsmf_PDUSession_UpdateSMContext response message to the AMF network element.

In some embodiments, the Nsmf_PDUSession_UpdateSMContext response message may be, for example, Nsmf_PDUSession_UpdateSMContext Response.

In an embodiment of the present disclosure, the non-UE PDU session can be modified or released.

In an embodiment of the present disclosure, the service request with parameters can be sent to the (R)AN in a separate message, which may be independent of the message used to transmit management information for the user plane connection.

In an embodiment of the present disclosure, the service request with parameters and management information for the user plane connection can also be sent in one message.

It should be noted that in a service-oriented architecture, messages are sent between core network elements, which can be achieved, for example, by calling the corresponding service. The response to the message can be, for example, the output after the corresponding service is called and executed. The message can be, for example, the message in steps 4, 7, 8, 9, and 10 mentioned above.

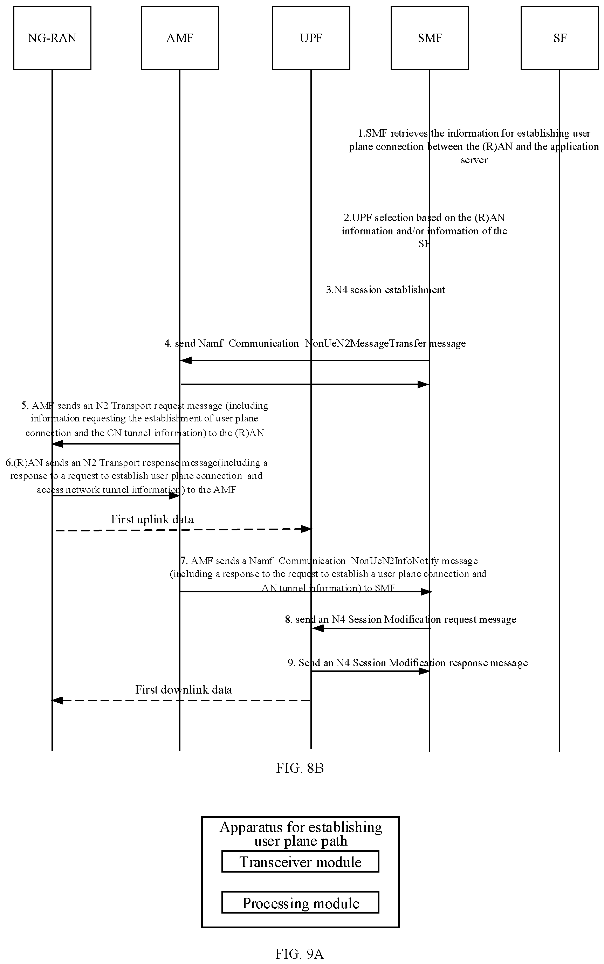

As shown in FIG. 8B, FIG. 8B is a schematic diagram of interaction in a method for establishing a user plane path according to still yet another embodiment of the present disclosure. As shown in FIG. 8B, in this embodiment of the present disclosure, including an AMF network element, a UPF network element, an SMF network element, an SF network element, and a (R)AN, with the (R)AN being the Next Generation Radio Access Network (NG-RAN) is taken as an example.

In embodiments of the present disclosure, a non-UE transfer mechanism among the SMF network element, AMF network element, and (R)AN can be employed to establish a user plane path, with one end of the user plane path being the (R)AN, using operations unrelated to the terminal.

In the embodiments of the present disclosure, Non-UE N2 information can be used to transmit relevant information from the SMF network function to the (R)AN via the AMF network element to establish the user plane path. In embodiments of the present disclosure, and a connection can be maintained at the SMF network element.

In embodiments of this disclosure, the user plane path between the (R)AN and the SF network element can be established along the (R)AN-UPF network element-SF network element. In embodiments of this disclosure, the sensing service may serve as an optional example of transmitting service data via the user plane path between the (R)AN and the application server. It is also possible to support the transmission of service data for any other service, such as transferring service data from the (R)AN to the first service server via the user plane. For instance, the data can be transmitted to the corresponding network function (NF) element in the CN, such as the LMF element for positioning services or the sensing function element (e.g., SF) for sensing services.
1. The SMF network element retrieves the information for establishing user plane connection between the (R)AN and the application server.
2. UPF selection based on the (R)AN information and/or information of the SF network element

In some embodiments, the SMF network function can perform UPF network element selection based on (R)AN information and/or the information of the SF network element.

In some embodiments, to maintain and manage the user plane connection as requested in step 1, the SMF network element can allocate an identifier (an optional example of identification information) for the user plane path which may be associated with the DNN and/or S-NSSAI of the sensing service and/or the (R)AN node to be connected, and the related information can be stored in the SMF network element indexed with the identifier.

### 3. N4 session establishment

4. The SMF network element sends a Namf_Communication_NonUeN2MessageTransfer message to the AMF network element.

In some embodiments, the SMF network function may invoke the Namf_Communication_NonUeN2MessageTransfer service to transfer the N2 information to the (R)AN. The N2 information may include core network tunnel information of the selected N3 UPF and indication information.

In some embodiments, the indication information is used to indicate that the user plane path is a specified user plane path, independent of the terminal, and with one end terminating at the access network.

In some embodiments, the N2 information may also include the requested QoS flow and/or the user plane information of the SF network element (e.g., the IP address of the SF network element).

In some embodiments, the SMF network element may also select the AMF network element based on the information of the (R)AN to be connected.

In some embodiments, the AMF network element can be selected by referencing the TAI list or CI list the (R)AN supported, and/or the capability supported for the non-UE user plane connection, i.e., the capability for the non-UE user plane path terminating at the access network.

In some embodiments, the SMF may subscribe from the same AMF for the non-UE N2 information for the non-UE user plane connection being managed (established/ modified/ released).

In some embodiments, the SMF network element may subscribe for all the possible AMF(s) connected with the (R)AN to be connected for the non-UE N2 information for the non-UE user plane connection being managed (established/ modified/ released).

5. The AMF network element sends an N2 Transport request message (including information requesting the establishment of user plane connection and the core network tunnel information) to the (R)AN.

In some embodiments, the N2 Transport request message may be, for example, an N2 Transport Request. The N2 Transport Request can include information requesting the establishment of user plane connection and the core network tunnel information.

In some embodiments, the AMF network element may transmit non-UE N2 information to the (R) AN based on the downlink N2 Transport request message.

In some embodiments, the (R)AN receives the non-UE N2 information for the user plane connection management (such as establishment), obtains the core network tunnel information, and establishes the user plane connection based on the core network tunnel information.

In some embodiments, if the N2 information contains user plane information of the SF network element (such as the IP address of the SF network element), then (R)AN can use the IP address of the SF network element to set the destination address of the packaged sensing service data packet.

In some embodiments, a new non-UE N2 request message can be defined, such as an UP path request message, through which the (R) AN is requested to establish a user plane path between the (R) AN and the SF network element.

6. (R)AN sends an N2 Transport response message(including a response to a request to establish a user plane connection and access network tunnel information) to the AMF network element.

In some embodiments, the N2 Transport response message may be, for example, an N2 Transport Response.

In some embodiments, the (R)AN may send an uplink N2 Transport response message to the AMF network element, which may include access network tunnel information and a response to the request to establish a user plane connection. The uplink N2 Transport response message may also include information related to the (R)AN's ability to generate the sensing data packet, such as whether the (R)AN supports packaging using the user plane information of the SF network element, i.e., the (R)AN uses the IP address of the SF network element to set the destination address of the data packet packaged by the (R)AN.

In some embodiments, if a new N2 request message (e.g. UP connection request message) is defined in step 5, the (R)AN can send a corresponding N2 response message to the AMF network element, which includes the access network tunnel information used for the requested user plane connection.

7. The AMF network element sends a Namf_Communication_NonUeN2InfoNotify message (including a response to the request to establish a user plane connection and access network tunnel information) to the SMF network element.

In some embodiments, the Namf_Communication_NonUeN2InfoNotify message may include a response to the request to establish user plane connection and access network tunnel information.

In some embodiments, the AMF network element notifies the non-UE N2 information received from (R)AN to the SMF network element which has subscribed it.

In some embodiments, the Namf_Communication_NonUeN2InfoNotify service can be invoked to send the Namf_Communication_NonUeN2InfoNotify message.

In some embodiments, the identifier allocated to the user plane connection in step 2 may be used to differentiate different non-UE N2 information for user plane connection management.

8. The SMF network element sends an N4 Session Modification request message to the UPF network element.

In some embodiments, the N4 Session Modification request message may be, for example, an N4 Session Modification Request.

9. The UPF network element sends an N4 Session Modification response message to the SMF network element.

In some embodiments, the N4 Session Modification response message may be, for example, an N4 Session Modification Response.

In some embodiments, the SMF network element can interact with the UPF network element to modify the N4 session.

In some embodiments, the SMF network element may provide the access network tunnel information and corresponding forwarding rules to the UPF network element.

In some embodiments, if the user plane information of the SF network element (such as the IP address of the SF network element) is not sent to the (R)AN and/or the (R)AN does not support using the user plane information of the SF network element for packaging and generating the sensing packet, forwarding rules can be configured per QFI.

In some embodiments, all the sensing packets associated with identified QFI can be forwarded to the SF network element, which requires that the QFI is dedicated for transferring the sensing data to the SF network element for the required sensing service.

In some embodiments, if the user plane information of the SF network element (such as the IP address of the SF network element) is sent to the (R) AN and the (R) AN supports packaging and generating perception data packets using the user plane information of the SF network element, the forwarding rule can be configured based on the destination address of the sensing data packets sent to the SF network element.

In some embodiments, the non-UE user plane connection can also be modified or released.

In an embodiment of the present disclosure, the service request with parameters can be sent to the (R)AN in a separate message, which may be independent of the message used to transmit management information for the user plane connection.

In an embodiment of the present disclosure, the service request with parameters and management information for the user plane connection can also be sent in one message.

In other embodiments of the present disclosure, the second (R)AN that needs to establish a user plane connection with the application server may be determined at the first (R)AN, and the first (R)AN may be the same or different from the second (R)AN.

In other embodiments of the present disclosure, the AMF network element may perform initial N2 interaction with the configured default (R)AN or selected (R)AN, and relevant information is forwarded to the (R)AN that needs to establish a user plane connection with the application server.

It should be noted that in a service-oriented architecture, messages are sent between core network elements, which can be achieved, for example, by calling the corresponding service. The response to the message can be, for example, the output after the corresponding service is called and executed. This message can be, for example, the message in steps 4, 7, 8, and 9 mentioned above.

FIG. 9A is a block diagram of an apparatus for establishing a user plane path according to an embodiment of the present disclosure. As shown in FIG. 9A, the apparatus for establishing a user plane path includes: a transceiver module, configured to determine first information and send a first message to a third network element, wherein the first information is configured to establish a user plane path, one end of the user plane path is an access network device, the first message includes indication information and core network tunnel information of a second network element, the indication information indicates to establish the user plane path, and the second network element is configured to establish the user plane path; and a processing module, configured to determine the second network element according to the first information.

Optionally, the above transceiver module is configured to perform the relevant steps executed by the first network element in any of the above methods, which will not be repeated here.

Optionally, the apparatus for establishing a user plane path further includes at least one of a sending module and a receiving module. The sending module is configured to perform the sending related steps executed by the first network element in any of the above methods, and the receiving module is configured to perform the receiving related steps executed by the first network element in any of the above methods, which will not be repeated here.

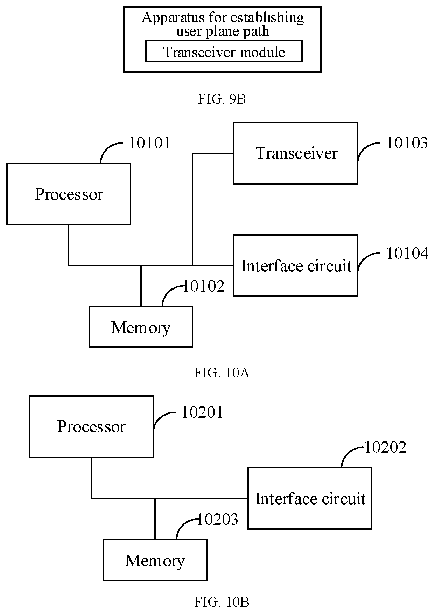

FIG. 9B is a block diagram of an apparatus for establishing a user plane path according to an embodiment of the present disclosure. As shown in FIG. 9B, the apparatus for establishing a user plane path includes: a transceiver module, configured to receive a first message sent by a first network element, wherein the first message includes indication information and core network tunnel information of a second network element, the indication information indicates to establish a user plane path, one end of the user plane path is an access network device, the second network element is selected based on first information; and send a fourth message to the access network device, wherein the fourth message includes the indication information and the core network tunnel information; or receive a fourth message sent by a third network element, wherein the fourth message includes the indication information and the core network tunnel information, the indication information indicates to establish the user plane path, one end of the user plane path is the access network device, and the user plane path is configured to transmit first service data.

Optionally, the above transceiver module is configured to perform the relevant steps executed by the second network element in any of the above methods, which will not be repeated here.

Optionally, the apparatus for establishing a user plane path further includes at least one of a sending module and a receiving module. The sending module is configured to perform the sending related steps executed by the second network element in any of the above methods, and the receiving module is configured to perform the receiving related steps executed by the second network element in any of the above methods, which will not be repeated here.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

As shown in FIG. 10A, which is a block diagram of a communication device according to an embodiment of the present disclosure, the communication device 10100 includes one or more processors 10101. The processor 10101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. The processor 10101 is configured to call instructions to cause the communication device 10100 to execute any of the methods above.

In some embodiments, the communication device 10100 further includes one or more memories 10102 for storing instructions. Optionally, all or part of the memories 10102 may also be located outside the communication device 9100.

In some embodiments, the communication device 10100 further includes one or more transceivers 10103. When the communication device 10100 includes one or more transceivers 10103, the transceiver 10103 performs at least one of communication steps such as sending and/or receiving in the above methods, and the processor 10101 performs other steps. In some embodiments, the transceiver may include a receiver and/or a transmitter, which may be separate or integrated together. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

Optionally, the communication device 10100 further includes one or more interface circuits 10104. The interface circuit 10104 is connected to the memory 10102, and the interface circuit 10104 may be used to receive signals from the memory 10102 or other devices, and may be used to send the signals to the memory 10102 or other devices. For example, the interface circuit 10104 may read instructions stored in the memory 10102 and send the instructions to the processor 10101.

The communication device 10100 in the description of the above embodiments may be a network device or a terminal, but the scope of the communication device 10100 described in the present disclosure is not limited thereto, and the structure of the communication device 10100 may not be limited by FIG. 10A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 10B is a block diagram of a chip according to an embodiment of the present disclosure. For the case where the communication device 10100 may be a chip or a chip system, reference may be made to the block diagram of the chip 10200 shown in FIG. 10B, but it is not limited thereto. The chip 10200 includes one or more processors 10201, and the processor 10201 is configured to call instructions to cause the chip 10200 to execute any one of the above methods.

In some embodiments, the chip 10200 further includes one or more interface circuits 10202. The interface circuit 10202 is connected to a memory 10203, the interface circuit 10202 may be used to receive signals from the memory 10203 or other devices, and the interface circuit 10202 may be used to send the signals to the memory 10203 or other devices. For example, the interface circuit 10202 may read instructions stored in the memory 10203 and send the instructions to the processor 10201. Optionally, terms such as interface circuit, interface, transceiver pin, and transceiver can be interchangeable with each other.

In some embodiments, the chip 10200 further includes one or more memories 10203 for storing instructions. Optionally, all or part of the memories 10203 may be located outside the chip 10200.

The present disclosure also provides a storage medium for storing instructions. When the instructions are running on the communication device 10100, the communication device 10100 is caused to implement any one of the above methods. Optionally, the storage medium is an electronic storage medium. Optionally, the electronic storage medium is a computer-readable storage medium, but is not limited thereto, and it may also be a storage medium readable by other devices. Optionally, the storage medium may be a non-transitory storage medium, but is not limited thereto, and it may also be a transitory storage medium.

In embodiments of the present disclosure, the processor is a circuit with signal processing capabilities. In an implementation, the processor may be a circuit with instruction reading and execution capabilities, such as a Central Processing Unit (CPU), microprocessor, graphics processing unit (GPU) (which can be understood as a microprocessor), or digital signal processor (DSP), etc. In another implementation, the processor can achieve certain functions through the logical relationships of hardware circuits, which are fixed or reconfigurable. For example, the processor is a hardware circuit implemented by an application specific integrated circuit (ASIC) or a programmable logic device (PLD), such as FPGA. In reconfigurable hardware circuits, the process of the processor loading configuration documents to implement hardware circuit configuration can be understood as the process of the processor loading instructions to implement some or all of the functions of the above units or modules. In addition, the processor may also be a hardware circuit designed for artificial intelligence, which can be understood as ASIC, such as Neural Network Processing Unit (NPU), Tensor Processing Unit (TPU), Deep Learning Processing Unit (DPU), etc.

The present disclosure also provides a program product. When the program product is executed by the communication device 10100, the communication device 10100 is caused to implement any one of the above communication methods. Optionally, the program product is a computer program product.

The present disclosure also provides a computer program. When the computer program is executed on a computer, the computer is caused to implement any one of the above communication methods.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Ordinary technical personnel in this field can realize that the units and algorithm steps described in combination with the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and simplicity of description, for the specific working processes of the systems, devices, and units described above reference can be made to the corresponding processes in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A method for establishing a user plane path, performed by a first network element, comprising:
determining first information, wherein the first information is configured to establish a user plane path, wherein one end of the user plane path is an access network device;
determining a second network element according to the first information, wherein the second network element is configured to establish the user plane path; and
sending a first message to a third network element, wherein the first message comprises indication information and core network tunnel information of the second network element, and wherein the indication information indicates to establish the user plane path.

2. The method of claim 1, further comprising:
establishing a user plane connection via the user plane path, wherein the user plane connection is configured to connect the access network device with a first service server, and configured to transmit first service data.

3. The method of claim 1 or 2, wherein the first information comprises at least one of:
the indication information;
information of the access network device;
information of a first service server;
a data network name (DNN) associated with the user plane path;
single network slice selection assistance information (S-NSSAI) associated with the user plane path;
service area information, wherein the service area information is configured to describe a target area of a first service; or
service location information, wherein the service location information is configured to describe a target location of a first service.

4. The method of claim 3, wherein the information of the first service server comprises at least one of:
an identifier of the first service server;
service area information of the first service server;
service information supported by the first service server;
DNN of the first service server;
an Internet protocol (IP) address of the first service server;
a data network access identifier (DNAI) of the first service server; or
S-NSSAI of the first service server.

5. The method of claim 3, wherein the information of the access network device comprises at least one of:
an identifier of the access network device;
an IP address of the access network device;
functional information supported by the user plane path;
S-NSSAI supported by the access network device;
a cell identity (CI) list supported by the access network device; or
a tracking area identity (TAI) list supported by the access network device.

6. The method of claim 3 or 5, wherein the information of the access network device is configured to select the third network element.

7. The method of any of claims 1-6, wherein the first message is configured to transmit N1N2 information, or the first message is configured to transmit non-UE N2 information.

8. The method of any of claims 1-7, further comprising:
allocating a session identifier for a packet data unit (PDU) session established, wherein the session identifier is configured to identify the PDU session, and the PDU session is configured to establish the user plane path; or
receiving a session identifier sent by a first service server.

9. The method of claim 8, further comprising:
creating session management (SM) context of the PDU session, wherein the PDU session is associated with DNN and/or S-NSSAI of a first service and/or information of the access network device.

10. The method of any of claims 1-9, wherein the indication information indicates that a PDU session is configured to establish the user plane path.

11. The method of any of claims 1-7, further comprising:
allocating identification information to the user plane path; or
receiving identification information sent by a first service server.

12. The method of claim 11, further comprising:
creating context related to the user plane path, wherein the user plane path is associated with DNN and/or S-NSSAI of a first service and/or information of the access network device.

13. The method of any of claims 1-7 or 11-12, wherein the first network element has subscribed from the third network element for non-UE N2 information, and/or the first network element has subscribed from each of a plurality of candidate third network elements connected to the access network device for non-UE N2 information, wherein the third network element belongs to the plurality of candidate third network elements.

14. The method of any of claims 1-13, wherein the first message further comprises at least one of:
a requested quality of service (QoS) flow;
user plane information of a first service server; or
related QoS parameters of a requested QoS flow.

15. The method of any of claims 1-14, further comprising:
receiving a second message sent by the third network element, wherein the second message comprises access network tunnel information of the access network device, and wherein the access network tunnel information is configured to establish the user plane path; and
sending a third message to the second network element, wherein the third message comprises the access network tunnel information and the indication information.

16. The method of claim 15, wherein the second message is configured to request update of SM context for a PDU session, or the second message is configured to notify non-UE N2 information.

17. The method of any of claims 15-16, wherein the third message further comprises a forwarding rule, wherein the forwarding rule is configured for the second network element to forward first service data.

18. The method of claim 17, wherein the forwarding rule comprises at least one of:
a first rule, wherein the first rule indicates forwarding a first service data packet associated with a QoS flow identifier (QFI); or
a second rule, wherein the second rule indicates forwarding a first service data packet according to a destination address of first service data.

19. The method of claim 17, wherein the forwarding rule is a first rule indicating forwarding a first service data packet associated with a QoS flow identifier (QFI); wherein, the access network device is not aware of user plane information of a first service server and/or a data packet generated by the access network device does not comprise a destination address of first service data packet encapsulated with the user plane information of the first service server.

20. The method of claim 17, wherein the forwarding rule is a second rule indicating forwarding a first service data packet based on an destination address of first service data; wherein, the access network device obtains user plane information of a first service server, and a data packet generated by the access network device comprises the destination address of the first service data packet encapsulated with the user plane information of the first service server.

21. The method of any of claims 1-20, wherein the first service server is an application server for a first application, and the application server is a network function (NF) network element of a core network or a third-party server.

22. A method for establishing a user plane path, performed by a third network element, comprising:
receiving a first message sent by a first network element, wherein the first message comprises indication information and core network tunnel information of a second network element, the indication information indicates to establish a user plane path, one end of the user plane path is an access network device, and the second network element is selected based on first information; and
sending a fourth message to the access network device, wherein the fourth message comprises the indication information and the core network tunnel information.

23. The method of claim 22, wherein the user plane path is configured to establish a user plane connection, wherein the user plane connection is configured to connect the access network device with a first service server, and configured to transmit first service data.

24. The method of claim 22 or 23, wherein the first information comprises at least one of:
the indication information;
information of the access network device;
information of a first service server;
a data network name (DNN) associated with the user plane path;
single network slice selection assistance information (S-NSSAI) associated with the user plane path;
service area information, wherein the service area information is configured to describe a target area of a first service; or
service location information, wherein the service location information is configured to describe a target location of a first service.

25. The method of claim 24, wherein the information of the first service server comprises at least one of:
an identifier of the first service server;
service area information of the first service server;
service information supported by the first service server;
DNN of the first service server;
an Internet protocol (IP) address of the first service server;
a data network access identifier (DNAI) of the first service server; or
S-NSSAI of the first service server.

26. The method of claim 24, wherein the information of the access network device comprises at least one of:
an identifier of the access network device;
an IP address of the access network device;
functional information supported by the user plane path;
S-NSSAI supported by the access network device;
a cell identity (CI) list supported by the access network device; or
a tracking area identity (TAI) list supported by the access network device.

27. The method of any of claims 22-26, further comprising:
receiving a fifth message sent by the access network device, wherein the fifth message comprises access network tunnel information of the access network device, and the access network tunnel information is configured to establish the user plane path.

28. The method of any of claims 22-27, wherein the first message is configured to transmit N1N2 information, or the first message is configured to transmit non-UE N2 information.

29. The method of any of claims 22-28, wherein the indication information is configured to indicate that a PDU session is configured to establish the user plane path.

30. The method of claim 29, wherein
the fourth message is an N2 interface message configured to request a PDU session establishment, the fifth message is an N2 interface message configured to respond to a PDU session establishment request, and the fourth message further comprises the indication information.

31. The method of any of claims 22-28, wherein
the fourth message is configured to request transmission of non-UE N2 information, the fifth message is configured to respond to a transmission request for non-UE N2 information, the fourth message further comprises second information, the second information is configured to request establishment of a user plane connection, the fifth message further comprises third information, and the third information is configured to respond to a request for establishing the user plane connection.

32. The method of any of claims 22-31, wherein the first message further comprises at least one of:
a requested quality of service (QoS) flow;
user plane information of a first service server; or
related QoS parameters of a requested QoS flow.

33. The method of any of claims 22-32, further comprising:
sending a second message to the first network element, wherein the second message comprises access network tunnel information of the access network device.

34. The method of claim 33, wherein the second message is configured to request update of SM context for a PDU session, or the second message is configured to notify non-UE N2 information.

35. The method of any of claims 22-34, wherein the first service server is an application server for a first application, and the application server is a network function (NF) network element of a core network or a third-party server.

36. A method for establishing a user plane path, performed by an access network device, comprising:
receiving a fourth message sent by a third network element, wherein the fourth message comprises indication information and core network tunnel information of a second network element, the indication information indicates to establish a user plane path, and one end of the user plane path is the access network device.

37. The method of claim 36, wherein the user plane path is configured to establish a user plane connection, wherein the user plane connection is configured to connect the access network device with a first service server, and configured to transmit first service data.

38. The method of claim 36 or 37, further comprising:
sending a fifth message to a third network element, wherein the fifth message comprises access network tunnel information of the access network device, and the access network tunnel information is configured to establish the user plane path.

39. The method of claim 38, wherein
the fourth message is an N2 interface message configured to request a PDU session establishment, the fifth message is an N2 interface message configured to respond to a PDU session establishment request, and the indication information further indicates that a PDU session is configured to establish the user plane path.

40. The method of claim 38, wherein
the fourth message is configured to request transmission of non-UE N2 information, the fifth message is configured to respond to a transmission request for non-UE N2 information, the fourth message further comprises second information, the second information is configured to request establishment of a user plane connection, the fifth message further comprises third information, and the third information is configured to respond to a request for establishing the user plane connection.

41. The method of any of claims 36-40, wherein the first service server is an application server for a first application, and the application server is a network function (NF) network element of a core network or a third-party server.

42. A method for establishing a user plane path, comprising:
by a first network element, determining first information, determining a second network element according to the first information, and sending a first message to a third network element, wherein the first information is configured to establish a user plane path, one end of the user plane path is an access network device, the second network element is configured to establish the user plane path, the first message comprises indication information and core network tunnel information of the second network element, and the indication information indicates to establish the user plane path;
by the third network element, receiving the first message sent by the first network element, and sending a fourth message to the access network device, wherein the fourth message comprises the indication information and the core network tunnel information;
by the access network device, receiving the fourth message sent by the third network element, and sending a fifth message to the third network element, wherein the fifth message comprises access network tunnel information of the access network device, and the access network tunnel information is configured to establish the user plane path; and
by the third network element, receiving the fifth message sent by the access network device, and sending a second message to the first network element, wherein the second message comprises the access network tunnel information.

43. An apparatus for establishing a user plane path, comprising:
a transceiver module, configured to determine first information and send a first message to a third network element, wherein the first information is configured to establish a user plane path, one end of the user plane path is an access network device, the first message comprises indication information and core network tunnel information of a second network element, the indication information indicates to establish the user plane path, and the second network element is configured to establish the user plane path; and
a processing module, configured to determine the second network element according to the first information.

44. An apparatus for establishing a user plane path, comprising:
a transceiver module, configured to receive a first message sent by a first network element, wherein the first message comprises indication information and core network tunnel information of a second network element, the indication information indicates to establish a user plane path, one end of the user plane path is an access network device, the second network element is selected based on first information; and send a fourth message to the access network device, wherein the fourth message comprises the indication information and the core network tunnel information; or
receive a fourth message sent by a third network element, wherein the fourth message comprises the indication information and the core network tunnel information, the indication information indicates to establish the user plane path, and one end of the user plane path is the access network device.

45. A communication device, comprising one or more processors; wherein the processor is configured to call instructions to cause the communication device to implement the method of any of claims 1-42.

46. A communication system, comprising a first network element, a second network element, a third network element, and an access network device, wherein the first network element is configured to implement the method of any of claims 1-21, the third network element is configured to implement the method of any of claims 22-35, and the access network device is configured to implement the method of any of claims 36-41.

47. A storage medium, storing instructions that, when run on a communication device, cause the communication device to implement the method of any of claims 1-42.
